# EUROPEAN PATENT SPECIFICATION

(11) **EP 2 638 698 B1**
(45) Date of publication and mention of the grant of the patent: **06.04.2016**
(21) Application number: 11805192.9
(22) Date of filing: 10.11.2011
(51) Int. Cl.: H04N 13/00

(54) **METHOD FOR PROCESSING A THREE- DIMENSIONAL VIDEO CONTENT AND RELATIVE APPARATUS**
VERFAHREN ZUR VERARBEITUNG DREIDIMENSIONALER VIDEOINHALTE UND ZUGEHÖRIGE VORRICHTUNG
PROCÉDÉ PERMETTANT DE TRAITER UN CONTENU VIDÉO TRIDIMENSIONNEL ET APPAREIL ASSOCIÉ

(30) Priority: 12.11.2010 IT TO20100905
(43) Date of publication of application: 18.09.2013
(73) Proprietor: S.I.SV.EL. Societa' Italiana per lo Sviluppo dell'Elettronica S.p.A., 10060 None (TO) (IT)
(72) Inventor: CELIA, Saverio, I-10040 Rivalta Di Torino (to) (IT); BALLOCCA, Giovanni, I-10131 Torino (IT); D'AMATO, Paolo, I-00195 Roma (IT); MILANESIO, Alessio, I-10071 Borgaro (to) (IT)
(74) Representative: Camolese, Marco
(86) International application number: PCT/IB2011/055006
(87) International publication number: WO 2012/063213

(56) References cited:
- EP-A1- 1 617 684
- EP-A2- 1 406 456
- WO-A2-2010/041896

## Description

The present invention relates to a method implementable in the video image stream processing field able to produce a three-dimensional display.

More particularly, the invention relates to a method for a user to select and enter data necessary to properly display a video image stream with a three-dimensional effect on a screen.

The three-dimensional perception of the reality in stereoscopic and autostereoscopic systems is basically based on the binocular vision phenomenon. In order to exploit the three-dimensional effect introduced by the binocular vision it is necessary to provide to the left eye and to the right eye of the user the corresponding left and right images. Therefore for a three-dimensional video content of the stereoscopic type it is necessary to provide at least two image sequences, at least one of which intended for the left images and at least one for the right images.

These right and left images are suitably transformed such to be directly displayed on a screen, or indirectly displayed on a screen by a projector, according to different possible stereoscopic displaying modes.

The most common stereoscopic displaying modes are those known as "line interleave" and "frame alternation".

In the line interleave displaying mode the lines of the left and right images are alternately displayed on a screen that has a surface with lines polarized in a different manner, for example a right-hand and left-hand circular polarization. A viewer wearing lenses that are polarized suitably with respect to the lines of the screen receives to the left eye only the lines of the left image and to the right eye only the lines of the right image, allowing the brain to achieve the three-dimensional effect.

In the frame alternation displaying mode, the visualisation apparatus, or a video processor associated thereto, has to extract the left and right images from the incoming video stream and to has to alternately display them on a screen.

Suitable shutter eyeglasses worn by the viewer allow the right eye of the viewer to be reached only by right images and the left eye to be reached only by left images, thus the brain can generate the three-dimensional effect provided in the usual human vision.

However, it is necessary for the reproduction or visualisation apparatus to know the configuration of the incoming video stream, that is the transport configuration with which each stream frame or image intended to be three-dimensionally displayed has been produced.

For instance, in order to properly generate a three-dimensional effect, the reproduction apparatus has to know where the right image and the left image of a given scene are in the video stream, whether they have been sampled and how. For example, in the case of a screen operating under frame alternation, in order to properly display a video stream in the three-dimensional mode it will be necessary a different procedure depending on the configuration of the video stream to be displayed.

Typically, the video processor of a video processing apparatus is programmed at the factory such to convert, according to predetermined modes, the decoded video stream into a video signal intended for being reproduced on a screen which is a part of a visualisation apparatus associated thereto. Said predetermined modes can change depending on the transport configurations of the video stream that therefore will be generally different than the configuration to be taken by the generated video signal in order to achieve the three-dimensional effect, with the help or not of the eyeglasses worn by the viewer. Obviously, this signal depends merely on the type of visualisation apparatus; however the conversion procedure, and therefore the visualisation procedure, cannot take place properly without knowing the configuration taken by the video stream to be reproduced. Anyway if it is unknown, it is necessary to communicate to the video processor in any manner which is the hypothetical stream transport configuration to be reproduced on an associated visualisation apparatus.

In other types of stereoscopic systems, for instance, the images are transmitted with suitable depth maps that, once combined with the related images before the reproduction, produce a video with a three-dimensional effect. Therefore even in systems of the autostereoscopic type it is necessary to transmit at least a first video sequence for the images and a second sequence with the depth maps inserted therein.

However, since the current systems for compressing, transporting and reproducing video contents provide only one two-dimensional video stream, the images or data of a three-dimensional content have to be inserted into a single stream of two-dimensional video frames, if the backward compatibility with such systems is desired to be maintained. Therefore for reaching such objective several techniques have been developed which can be classified according to two different types: "frame compatible" and "service compatible".

The "frame compatible" techniques involve a generic device intended to reproduce a specific two-dimensional stream able to display on an associated visualisation apparatus the images of a video stream of the three-dimensional type without the need of being subjected to any software or hardware changes, with the only loss of the three-dimensional effect for which a system converting the stream images to the particular visualisation apparatus, as well as a visualisation apparatus able to perform such conversion are necessary. In particular, it is possible to display the stream of left or right images on a visualisation apparatus. For instance "Side by Side", "Top-bottom" and "splitting" configurations are within such class of backward compatible streams, wherein one of the left or right images is allocated into the frame without being subjected to splitting, while the other one is broken up into several parts that are arranged, rotated or not, in the space not occupied by the first image. The "frame compatible" techniques are further different as regards image arranging techniques which are different one another on the basis of parameters such as, for example, position, size, rotation, decimation or subsampling, arrangement and the transfer rate of the several images into the video stream.

On the contrary, in the video streams produced according to "service compatible" techniques it is not possible to display, on a generic apparatus intended to display a specific video stream, both the stereoscopic images provided in the video stream. In this type of video streams one of the two images is represented as the difference or even disparity with respect to the other one (for example as the displacement of the viewpoint, as depth map, etcetera) and data related to such difference are suitably encoded and inserted in the video stream as metadata, that is as data not intended to contain immediately displayable visual information. However, an apparatus intended to reproduce a specific video stream is able to properly interpret and reproduce one of the two images of this type of backward compatible video streams, while data related to the other image cannot be properly interpreted and therefore cannot be used for displaying the other stereoscopic image, without changing the structure and the operation thereof. For instance, the "L + depth" and "2D + Delta" configurations fall within this class of backward compatible streams.

The plurality of methods and techniques for representing and displaying three-dimensional contents mentioned up to now therefore involves the presence of several transport configurations of the three-dimensional video content.

Currently, in order to transmit and display a three-dimensional video stream, there are no reference standard or technique really usable on any production, transport, distribution and reproduction system. Moreover there is not a reference standard for signalling, inside the video stream, the transport configuration that has been adopted for producing the three-dimensional effect. Such signalling is usable by the visualisation apparatus for properly interpreting the video stream to be displayed.

Moreover, the apparatuses reproducing and/or receiving three-dimensional video streams are provided with several interconnection interfaces, such as DVI-D, DVI-I, HDMI, Display Port, USB, WiMAX, Wi-Fi, Wireless Gigabit Alliance, and obviously they can be directly equipped with the tuner, with Blu-ray or DVD reader and with internal solid-state or optical memories. Therefore the three-dimensional contents are provided to the reproduction apparatus in several forms, such as for example a content stored on a Blu-ray or DVD medium, a video file downloaded from the Internet by PC, or a broadcasting channel (satellite, cable, terrestrial) in the case a content comes directly from a tuner integrated within the reproduction and/or receiving apparatus. Each one of such contents or video streams can take a different transport configuration for the three-dimensional content.

Here the term video stream means a series of video frames each one containing one or more decompressed images or decompressed video data ready to be used by a visualisation apparatus. The decompressed video data and images contained in said frames have their own transport configuration that has to be known to the visualisation apparatus in order to be properly reproduced. This does not mean that such streams cannot generally comprise even other information or contents different than video images, such as for instance audio contribution, data associated or not to the video or audio content (teletext, EPG, signalling, metadata, and so on). In this case it will be necessary to extract or separate the video content from the other information contents provided in the stream.

EP 1 406 456 A2 describes an electronic apparatus that facilitates determining whether image data is representing a 2D image or a 3D image and determining a type of image data. When image data is obtained, the electronic apparatus memorizes, in addition to the image data and a filename thereof, a dimension of an image represented by the image data and a type of the image data as an attribute thereof. The electronic apparatus also creates from the image data and memorizes image data representing a thumbnail image, and displays the thumbnail images arranged in a list view so that a content of the image represented by the image data is easily recognized. It is also possible to provide the thumbnail image data representing a 3D image.

EP 1 617 684 A1 discloses an image signal composed of sequential frames that is inputted to a 3-dimensional image creating apparatus, frame by frame. A controller designates the presence/absence of reduction, the presence/absence of joining and 2D select. An image converter creates image data in the format designated by the presence/absence of reduction and the presence/absence of joining. A 3D information creator creates 3D information necessary for displaying the image as a 3-dimensional image by formatting the presence/absence of reduction, the presence/absence of joining and 2D select. A multiplexer converts image data and 3D information in a predetermined format and outputs them to the outside.

WO 2010/041896 A2 discloses a receiving system and a method of processing data. The receiving system includes a receiving unit, a system information processor, a decoding unit, and a display unit. The receiving unit receives a broadcast signal including a 3D content and system information associated with the 3D content. The system information processor extracts identification information from the system information. Herein, the identification information may identify that the broadcast signal being received by the receiving unit includes the 3D content. The decoding unit decodes the received 3D content based upon transmission format information of the 3D content. The transmission format information may be included in the extracted identification information, and the display unit displays the 3D content decoded by the decoding unit as a 3D image based upon a display method of a display device.

Therefore the technological scenario described above is very complex and diversified due to the complexity level reached by the reproduction and/or receiving apparatuses, due to the several possible continuously evolving transport configurations, and due to the fact that there are no reference standards for the signalling of three-dimensional contents. Therefore it may happen that the transport configuration of the three-dimensional video stream is not properly signalled or it is not signalled at all. Real examples of this situation are provided in the case of video contents transmitted by broadcasting signal transport systems wherein the three-dimensional content signalling data are not correct or are not provided, since the apparatuses used for the compression and the transport of three-dimensional contents are not able to insert them or do not have the necessary automation for periodically updating the signalling data to the transmitted three-dimensional content.

For example, it may happen that a first television "RaiUno" service contains three-dimensional contents whose transport configuration is not signalled. It may further happen that a given programme inside the "RaiUno" service uses three-dimensional contents configured according to the "side by side" technique properly signalled by a field denoting such configuration, while the following programme still belonging to the same service contains contents having a configuration of the "top-bottom" type. But the signalling field related to the new programme contains the "side by side" indication, since it is not updated with respect to the previous programme, and therefore it may happen that the "top bottom" three-dimensional content is wrongly signalled as "side by side", thus preventing the programme from being properly identified and consequently to be properly displayed. Similar considerations apply in the case of three-dimensional contents stored in storage media: such contents can be obtained by means of encoders that are not able to introduce the signalling of the transport configuration of the compressed three-dimensional video stream. Moreover it is possible that original three-dimensional contents having a specific configuration and properly signalled have been reconverted or transcoded for any reasons into three-dimensional contents having a configuration different than the original one by a converter that is not able to completely transport or to properly convert the signalling field of the new configuration. Finally, it has to be noted that the evolution of the configuration techniques is very rapid and diversified, and therefore the interfacing standards of the electronic apparatuses reproducing and receiving three-dimensional contents (standards such as for example the HDMI) do not contain or are not updated to some transport configurations used in the market.

Mechanisms automatically recognizing the video stream configuration are known in the art which are based on the recognition of a specific signalling inserted in the video stream. However, these mechanisms fail when the signalling is absent or wrong, therefore it happens that the reproduction apparatus is not able to properly reproduce the three-dimensional video stream since the signalling of the transport configuration adopted for the content to be displayed is not present or since such signalling is wrong. In these cases the user has to manually enter the data related to the transport configuration of the three-dimensional content.

Apparatuses reproducing three-dimensional contents provided with specific graphic interfaces or selectors placed on control units by means of which the user can select one specific transport configuration for the received three-dimensional video stream are available in the market. However, as already described above, there are many possible transport configurations that can be taken by a video stream, therefore leading to a long list of different possible transport configurations among which the user has to select the proper one. Therefore it is complicated for the user to select one by one the possible configurations from this list for searching the proper configuration. Thus the selection operation involves a certain time conscription since for each selected configuration the user has anyway to verify, by the visualisation apparatus, that the selected configuration causes the three-dimensional content to be properly reproduced. Moreover, a further drawback of such reproduction apparatuses is that the user is not always able to verify that the selected and set configuration is the proper one, since it is possible that two or more different transport configurations produce on the screen three-dimensional displays that are very similar one to the other, having hardly intelligible contents, whose differences are hardly perceived by the user. However such differences, besides leading to a wrong three-dimensional display, can lead over time to uncomfortable feelings for the user.

Therefore it is an object of the present invention to provide a method for processing a three-dimensional content allowing a user to select the proper transport configuration for the content itself such to display it on a reproduction apparatus.

A further object of the present invention is to provide a method for processing a three-dimensional content that considerably reduces the time necessary to define the proper transport configuration for the content itself.

A further object of the present invention is to provide a method for processing a three-dimensional content reducing the probability of selecting a wrong transport configuration, resulting in preventing it from being properly displayed on a reproduction apparatus.

Briefly, the method according to the present invention provides to generate a display signal for displaying on a screen of a visualisation apparatus, or on a relevant portion thereof, at least a single frame of a video stream having a specific transport configuration, said configuration being intended to produce a three-dimensional effect.

According to the method of the present invention, the single frame is displayed in its two-dimensional format. Thus, on the basis of the content displayed on the screen of the visualisation apparatus, the user can select the proper transport configuration without any particular difficulties.

For instance, in the case of a three-dimensional video stream having a transport configuration of the "side by side" type, two images are displayed on the screen, one taking the left portion and the other one the right portion of the frame displayed in the two-dimensional mode. Thus the user immediately perceives the transport configuration used for such three-dimensional video stream.

The invention is set out in the annexed claims, that are intended as an integral part of the present description, whose teachings will be more clear from the detailed description of one preferred embodiment made by way of not limitative example, with a particular reference to the Figures wherein:
- Figures 1 and 2 are a first and a second embodiments respectively of a block diagram of a system processing three-dimensional and also two-dimensional video contents;
- Figures 3a-3f and 4a-4f are examples of graphic representations that can be reproduced on a screen of a visualisation apparatus associated to an apparatus implementing a method according to the present invention;
- Figures 5, 6 and 7 are three possible embodiments of interactive menus for selecting a transport configuration;
- Figures 8a and 8b are two further possible embodiments of a display on a screen of a visualisation apparatus associated to the apparatus according to the present invention;
- Figures 9a and 9b are the upper portion and the lower portion respectively of a table related to transport configurations of a three-dimensional video stream with different hierarchical level.
- Figures 10a and 10b are the upper portion and the lower portion respectively of a block diagram related to the selections of transport configurations with different hierarchical level.

It is clear that the screenshots shown in some of said figures do not represent a faithful and accurate reproduction of a real apparatus, but they are intended to provide a schematic and approximate idea, but completely clear and immediately comprehensible to those skilled in the art, of possible embodiments of the method and of the system according to the present invention.

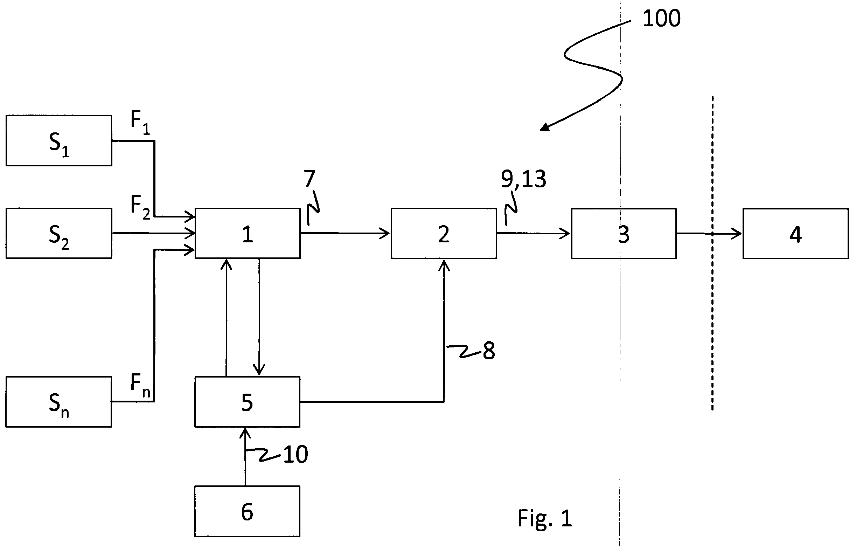

With reference to Figure 1, there is shown a video processing system 100 for three-dimensional and even two-dimensional contents that comprises:
- one or more sources S₁,... Sₙ of three-dimensional and even two-dimensional video streams F₁, F₂, ..., F_{N}, that can comprise: reception units for receiving broadcast television transmissions via cable or over-the-air; Blu-ray or DVD players; memory readers using USB interface, solid-state or optical memories; interface ports for such devices;
- a decoder 1 acquiring and decoding data provided by a generic source Sᵢ;
- a video stream processor 2 capable of inserting graphic interfaces in the video stream and of processing the latter such that it can be transported on a data exchange interface 3 that transports a video stream to be displayed;
- a control module 5 capable of controlling the operation of the decoder 1, of the video stream processor 2 and of receiving control signals from a user control unit 6 that outputs signals to the control module 5 in response to an operation performed by a user: the user control unit 6 can be implemented in several manners such as for instance a plurality of keys, a remote control and so on, such to allow the user to select functions and to give commands.

The video processing system 100 can further comprise a visualisation apparatus 4, comprising for example a screen, a projector and so on. However, for the purposes of the present invention, the visualisation apparatus 4 may also not be integrated within the video processing system 100, but associable therewith by any known connection means, both wired (for example SCART, HDMI, DVI, display port, RCA-Cinch) and wireless. The teaching of the present invention can be carried out independently of the presence of the visualisation apparatus 4.

The processing system 100, for instance, can be a television set, a set-top box, a video recorder, a mobile phone, or a portable multimedia player, capable of acquiring and reproducing three-dimensional video contents.

The generic source Sᵢ acquires, for example from a Blu-ray/DVD medium, from a broadcast transmission signal, from a USB memory or an internal hard disk, a three-dimensional video content and sends it to the decoder 1 in the form of a transport stream Fᵢ.

Here the term transport stream means a stream of information comprising the data of a compressed or decompressed video stream, and a series of metadata which contain, among other information, also that information useful for extracting and representing the individual frames constituting the video stream, such as for instance the resolution of the individual frames and information for their decompression.

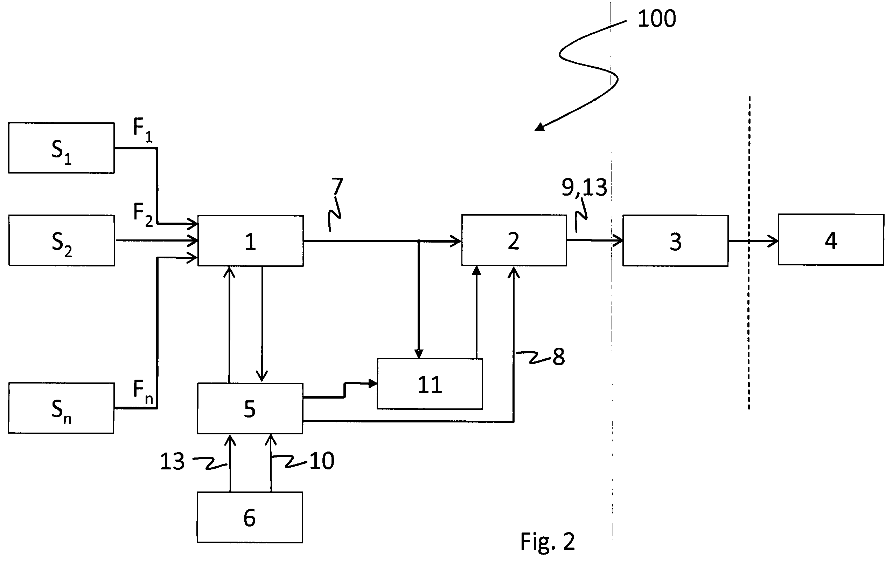

Each one of the sources S₁, S₂... Sₙ is able to provide a corresponding transport stream F₁, F₂, ..., Fₙ. A generic transport stream Fᵢ will be considered below. These transport streams Fᵢ usually are not simultaneously sent to the decoder 1: there is provided a multiplexer or input selector device (not shown in Figures 1 and 2) that allows only one video stream Fᵢ at a time to pass (or as many video streams Fᵢ as the decoder 1 is able to process simultaneously).

Which video stream is sent to the decoder 1, generally depends on the adjustments made by the user and on the currently active settings, that is on the selected input port (for example US or HDMI) and/or on the type of selected signal (for example DVB-T or T2, DVB-S or S2, DVB-C or C2, ATSC, ISDB-T television signal) that can come from different reception and processing units.

The decoder 1 is able to decompress the data relevant to the compressed video stream contained in the generic transport stream Fᵢ, if such video stream is coded, or in any case to extract a video stream 7 from the generic transport stream Fᵢ and to output said video stream 7 to the video stream processor 2.

The video stream 7 containing the packed frames in the transport stream Fᵢ is obtained at the output of the decoder 1, wherein the images take a particular configuration in the video stream 7 such to produce on the screen a display having the aim of generating a three-dimensional effect.

Possible transport configurations of the images in a video stream 7 intended to produce a three-dimensional effect for example are the following: "top bottom", "field alternative", "line alternative", "side by side", "column alternative", "splitting", "L + depth", "L + depth + graphics + graphics - depth", "2D + Delta".

If such transport configuration is (not necessarily properly) signalled in the transport stream Fᵢ, the decoder 1 sends the signalled value about the transport configuration to the control module 5. Thereafter the video stream 7 is sent to the video stream processor 2. The control module 5 controls the operation of the video stream processor 2 by means of a control signal 8. Depending on the values taken by the control signal 8, the video stream processor 2 operates in different operating modes. In addition or as an alternative in the apparatus there can be provided a system computing the transport configuration on the basis of the video content of the transport stream Fᵢ that is communicated to the decoder 1. According to a first operating mode, or three-dimensional rendering display mode, the video stream processor 2 performs such a conversion and adaptation of the video stream 7 to make it suitable for being reproduced on a specific visualisation apparatus 4 associated thereto according to predetermined modes, that is programmed for this purpose, such to produce a three-dimensional effect on one screen of the visualisation apparatus 4 for a viewer equipped with suitable eyeglasses, if needed. Such conversion and adaptation operations generate a first interface video signal 13 upon which the video processor 2, in addition, in cooperation with the control module 5 or not, can execute adaptation operations for the transport on data interface 3 by inserting some metadata useful for displaying the video stream 7 on the visualisation apparatus 4. In said metadata even the signalled value of the transport configuration is inserted which is sent to the video stream processor 2 through the control module 5. The data exchange interface 3, in turn, transfers the first interface video signal 13 to the visualisation apparatus 4.

According to a second operating mode, or frame display mode, the video stream processor 2 processes the contents of the video stream 7 such to obtain a second interface video signal 9 that can be reproduced by the visualisation apparatus 4, such that the images contained in the video stream 7 at the output from the decoder 1 are made at least partially directly visible. The video signal 9 is sent, through the data exchange interface 3, to the visualisation apparatus 4. The data exchange interface 3, in case of external visualisation apparatus 4, can be for example of the HDMI type or display port type. On the contrary, in the case of a visualisation apparatus 4 integrated within the video processing system 100, it can take the form of data bus inside the system.

It is possible to provide the user to send through the control unit 6 a control signal 10 requesting to verify the transport configuration of the three-dimensional video content currently provided as output from the video processing system 100, for example after identifying a wrong (three-dimensional or two-dimensional) display of the 3D video content, or simply in order to verify the proper selection of the transport configuration of such content.

In response to such control signal 10 the control module 5, through the control signal 8, causes the video stream processor 2 to pass from the first operating mode to the second operating mode described above.

As an alternative or in addition, it is possible to provide such passage to take place if the video processing system 100 is equipped with a transport configuration recognition system that does not succeed, or that believes it did not succeed, to define the transport configuration of the input stream Fᵢ to be reproduced on an associated visualisation apparatus 4. In the case of a recognition system able to extract and interpret from the video stream 7, by a suitable metadatum, the signalling related to such configuration, the non-identification of the transport configuration can be due for example to the non-signalling or to an ambiguous or wrong signalling. In the case of a video processing system 100 equipped with a recognition system based on the analysis of the images contained in the video stream 7, such non-identification can be due for instance to their extreme complexity or to their extreme variability or instability. In a passage of such type it is the control module 5 that, once the impossibility of recognizing the configuration is detected, emits the control signal 8 to the video processor 2. It is obviously possible for one or both the two possible modes activating the control signal 8 and the consequent frame display to be activated at the factory and if necessary deactivated, activated or reactivated by the user.

In the second operating mode an output video signal 9 from the video stream processor 2 is obtained, which is intended to display, on the screen of the visualisation apparatus 4 or in a portion of such screen, the video image or images or the data images contained in a single video frame of the video stream 7 currently selected to be displayed, by maintaining the arrangement and content that such images have into the single frame.

For instance, this result can be achieved by causing the video processor 2 and the visualisation apparatus 4 to operate in such a way to reproduce the video stream 7 in the two-dimensional mode, for example without making any treatment to achieve a three-dimensional representation, or in such a way to execute an operation leading the frame display to be two-dimensionally reproduced, namely a flat one, with zero depth. Therefore the video signal 9 is provided through the data exchange interface 3 to the visualisation apparatus 4. The arrangement and the content of this or these images give the user a clear indication of the transport configuration adopted by the currently selected three-dimensional content. In order to better explain the type of information that can be provided to the user by means of a display of this type, some examples are shown below. In the description below, a generic pixel array in a frame intended to represent data related to a video image, such as for example the depth map of an image, is generally denoted by the term data image in order to indicate that these are video information from which it is possible to indirectly calculate the real video content of the original stereoscopic image.

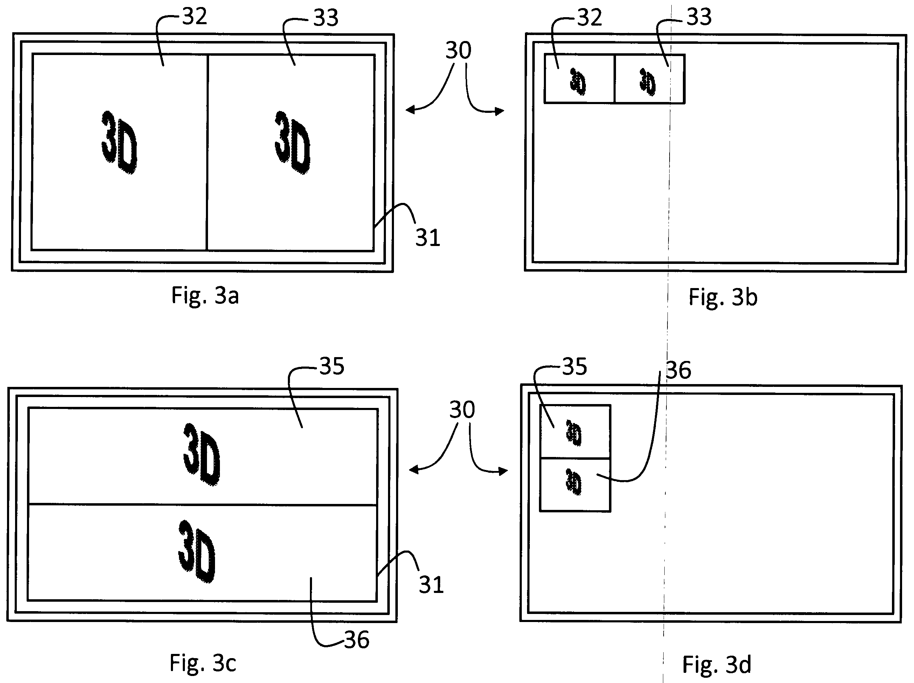

If a display like the one shown in Figure 3a or 3b comprising two images, one in the left portion 32 and one in the right portion 33 of the video frame 21 is displayed on a screen 30 of a visualisation apparatus 4, in response to the control signal 10, it is clear for the user that the currently reproduced three-dimensional content has a transport configuration of the "side by side" type, since the two images are one next to the other.

Figure 3b shows the case wherein the frame display 31 occupies only partially the visible area of the screen 30.

Figures 3c and 3d show the case when two images are inserted into the single frame, such that the frame display 31 comprises an image in the upper portion 35, and an image in the lower portion 37 of the video frame 34, and therefore it is clear that the transport configuration taken by the currently selected three-dimensional content is of the "Top bottom" type. Figure 3d shows the case when the frame display 31 occupies only partially the visible area of the screen 30.

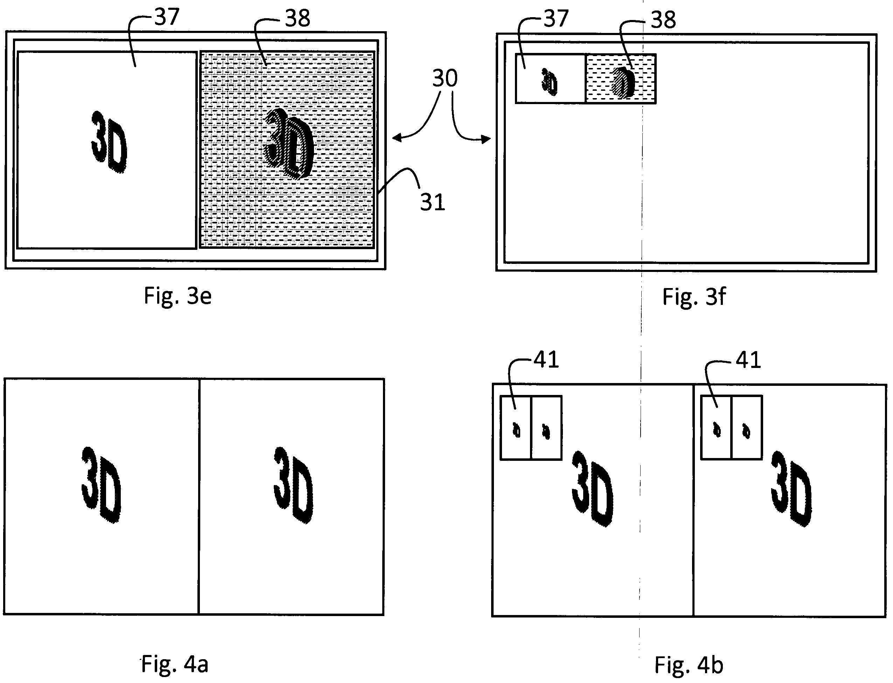

Finally, in the schematic example shown in Figures 3e and 3f, in the left portion 37 of the frame display 31 a video image is shown, while in the right portion 38 a data image is displayed which is a depth map: in this case the currently reproduced three-dimensional video content takes a configuration of the "L + depth" type. For the user, above all for a non-expert user, it is important to generally define the type and/or arrangement of the images inserted in the individual video frame.

Obviously the frame display can be made according to different graphic forms. For instance, it can occupy the entire screen 30 of the visualisation apparatus 4, such as shown in Figures 3a, 3c and 3e, or it can take only a part thereof, such as shown in Figures 3b, 3d, and 3f. In the latter case, it is possible to provide the remaining part of the screen 30 to be dedicated to display the three-dimensional video content or to represent graphic interfaces or data related to such content. Moreover, the part dedicated to the frame display 31 can be displayed simultaneously with the corresponding three-dimensional video content resulting in a separate or superimposed portion, either in transparency or in opaqueness, with respect to such content. In this case, for instance, the video processor 2 could compose the interface video signal 9 by suitably combining the box containing the frame display in the composite frame that contains also the rendering display and possible other portions of images to be displayed on the same screen (for example drop down menus, superimpositions and/or boxes containing graphic or alphanumerical elements).

It may happen that the display of the content of a single frame is not sufficient for verifying the proper configuration taken by the three-dimensional content; in this case it is therefore appropriate to adopt an alternative implementation, such as the one shown in Figure 2. According to this embodiment of the video processing system 100, it is possible to display on the screen 30 of the visualisation apparatus 4 also the content of the frames immediately following the currently displayed frame. Each time the control module 5 receives the control signal 10 requesting the frame display, it activates a buffer 11 that stores a predetermined sequence of frames inside it. The amount of frames that are stored can be decided in the manufacturing phase of the video processing system 100 or even by a suitable adjustment made by the user. The video stream processor 2 is connected to the buffer 11 by a line 14 and it receives the frames stored therein. The content of the buffer 11 can be used by the video stream processor 2 in order to generates a second interface video signal 9 made according to different possible options.

A first option consists in a second video signal 9 intended to display on an associated visualisation apparatus 4 the reproduction of a first frame. By means of a second control signal 10 requesting the frame display that is sent to the control module 5, that in turn defines the behaviour of the video stream processor 2, the user requests a second frame to be displayed. The video stream processor 2 generates a video signal 9 intended to represent the display of a second frame immediately following the first one. By repeating such procedure mode, it is possible for the user to display the overall sequence of frames stored in the buffer 11.

A second option provides the several frames to be displayed in a way similar to what provided in the first option, but, instead of flowing the frames one by one, it is possible for the user to display them as groups or to display all of them in a single display.

The case of the "frame alternation" technique is a situation when the display of the content of a second frame can be particularly effective for the user to define the proper transport configuration.

In this case, the left image and the right image or the video image and its corresponding data image are alternately inserted as a sequence of individual frames, that is, for instance, in a first frame there is the left image, in the second following frame there is the right image and so on for the complete sequence of frames of the video stream 7.

In a further embodiment of the invention, the frame display is periodically updated. It may happen that the frame display mode is selected for a long period of time: in this situation it is possible to provide at regular intervals, appreciable by the user as regards time, to update the content of the frame display to a new frame belonging to the video stream 7. At regular intervals calculated for example by an internal clock circuit CK, not shown in Figures 1 and 2, the control module 5, through the control signal 8 requests to the circuit of the video stream processor 2 to select a new frame from the video stream 7 and to make a new video signal 9 on the basis of the content of the new selected frame. In case of the presence of the buffer 11, the control module 5 causes the buffer 11 to reset and causes it to store a new frame sequence from the video stream 7. The length of such regular updating intervals can be defined during the manufacturing phase or can be set by the user. It is also possible to provide the update of the frame display to take place by a control signal 10 sent to the control module 5, which consequently verifies the operation of the video stream processor 2 and of the buffer 11, if any.

After the phase verifying the transport configuration of the three-dimensional video content, such phase being based on the frame display, it is possible to provide that the user, for example after having detected a wrong three-dimensional display of the three-dimensional video content, sends a request for modifying the currently set transport configuration.

The currently set transport configuration, namely the configuration value sent by the control module 5 to the video stream processor 2 in order to be inserted in the first interface video signal 13, can be the transport configuration signalled, properly or not, in the transport stream Fᵢ, or as an alternative a configuration previously selected by the user. The control signal 10 requesting the modification of the configuration is sent, by the user control unit 6, to the control module 5. The control module 5 by the control signal 8, requests to the video stream processor 2 to generate a new second interface video signal 9, such new second video signal 9 being intended to display a graphic interface by means of which the user can select a new transport configuration.

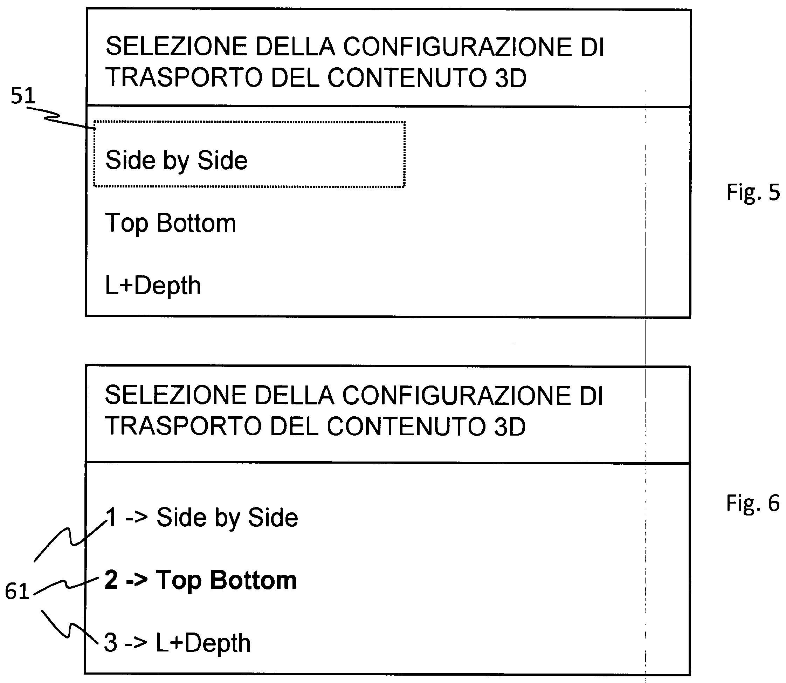

There are several possible options for making said graphic interface. However, it has to be noted that the teaching of the present invention can be implemented independently on the graphic shape taken by such interface and on the specific text form of the information contained therein. The main objective of the graphic interface is to allow the user to select the proper transport configuration on the basis of the information obtained by the user from the frame display. Some options for making such interface are described below by way of example. The options listed below are divided in content options, where the information content of the graphic interface is described, and graphic options, where the shape and position of the graphic interface in the screen of the visualisation apparatus are described. A first content option consists in displaying in the graphic interface a list of possible transport configurations specified by their technical name. According to a first alternative it is possible to select the transport configuration by a numerical key 61 associated to the configuration, provided on the control unit 6, such as shown in Figure 6, or by means of a cursor or a rectangular highlighting background 51 that points out one of the possible configurations depending on the inputs received by the user control unit 6 such as shown in Figure 5.

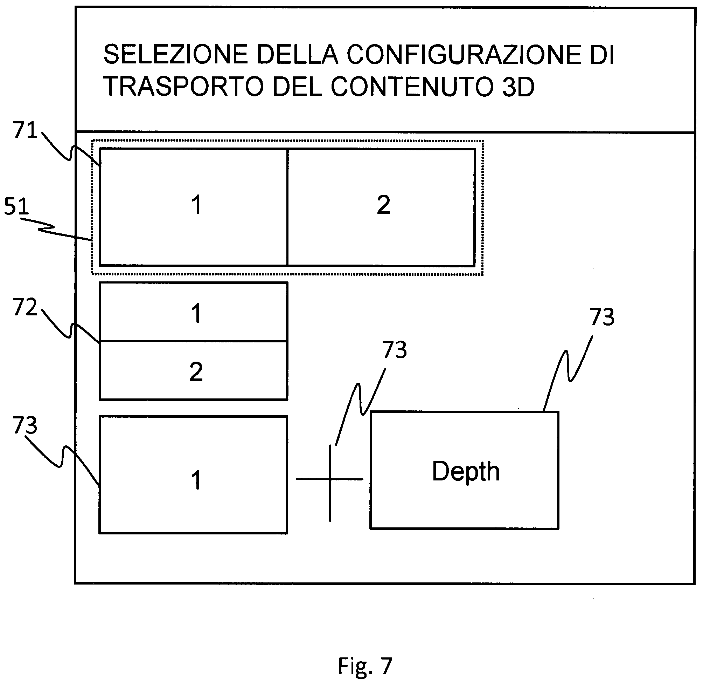

In order to list the several transport configurations in a second content option, the technical name is not used, but a simple graphic symbol is used which recalls the information that the user can obtain from the frame display, such as for example the arrangement of the images inside the several frames. For instance, for the "side by side" it is possible to provide a graphic symbol composed of two adjacent squares containing the numbers 1 and 2, that therefore mean that in the individual frame there are provided two images 1 and 2 side by side. An example of such option is shown in Figure 7 where the symbol 71 denotes a "side by side", the symbol 72 a "top bottom" and the graphic symbols 73 denote a "L + depth". The considerations made for the first content option apply for the selection of the several symbols.

It may happen that the interactive selection of the transport stream configuration is requested since the user believes the three-dimensional display to be wrong or that the video processing system 100 has not been able to define the configuration of the input video stream. Anyway, the control module 5 has to select which rendering (three-dimensional) display has to be activated first for the video stream to be reproduced on the visualisation apparatus 4 in case of a specific request, such to allow the user to start the procedure for interactively selecting the transport configuration. This can be accomplished according to several selection criteria.

A selection criterion can be to establish such rendering display in a fixed manner at the factory; another criterion can be to establish only the active one at the beginning by default and to allow the user to change it, for example by means of the menu.

As an alternative, such first display can be a two-dimensional display that is only one frame display (partial or total screen), while any three-dimensional display is deactivated in order to avoid altered or incorrect reproduction for the user.

In addition, the non-identification of the three-dimensional transport configuration can depend on the fact that the stream to be displayed is two-dimensional. Starting from this initial display, the user, in an interactive manner and assisted by possible instructions or suggestions displayed on the screen of the visualisation apparatus 4, can carry out the operations necessary to define and select the proper transport configuration.

As regards the graphic options, a preferred embodiment consists in adding to the normal display of the three-dimensional content the graphic selection interface and, in a different region of the screen separate from the previous one, in reproducing also the frame display, such that both the transport stream configuration and the one generated by the visualisation apparatus 4, corresponding to that specific configuration, are reproduced in the same screenshot, as it would be in the three-dimensional rendering display mode. Thus the user immediately perceives what is happening in the video processing system 100 and can quickly and effectively define and visually select the proper stream transport configuration, without superimpositions of different types of images that may generate confusion.

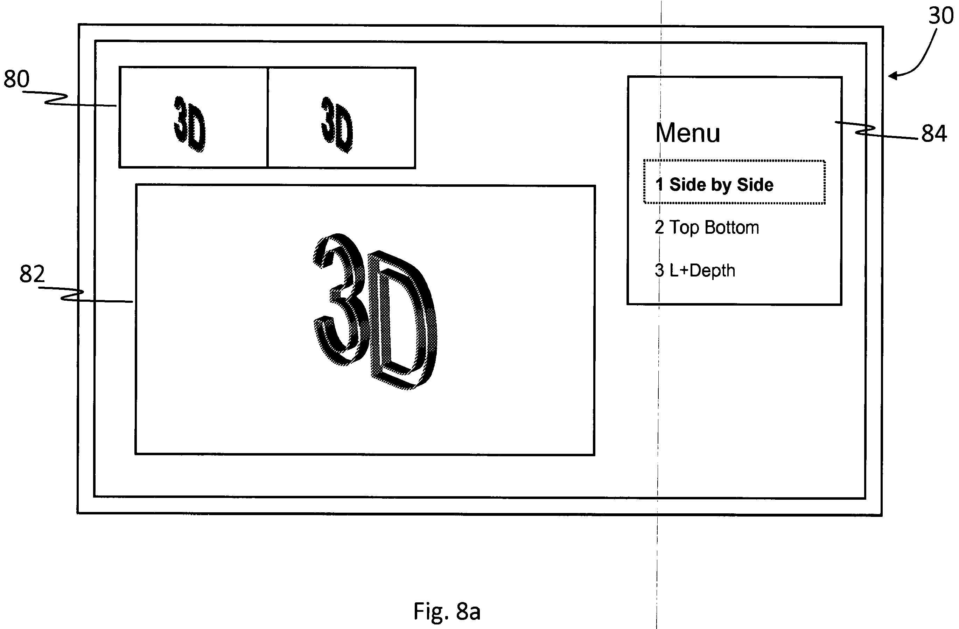

A possible implementation is schematically shown in Figure 8a, where, near the frame display 80 of the video stream to be displayed, there is simultaneously shown, in the same screen, the three-dimensional display 82 generated by the video processor 2 after the procedure for the adaptation to the activated display for the configuration currently selected by the user. In the case of Figure 8a it has been assumed that the input video stream is of the side-by-side type: therefore, since the currently selected display is just the side-by-side, the box 82 containing the 3D display corresponding to such selection is correct. In this case, it is clear for the user that further configuration settings of lower hierarchical level are not necessary (as it will be better described below), so the user can confirm the selection for example by operating a key of the control unit 6 and the video processing system 100 can, for example, pass to the usual full screen 3D display, after having requested to the user, if necessary, if an association between such selected configuration and the played video stream is desired to be stored.

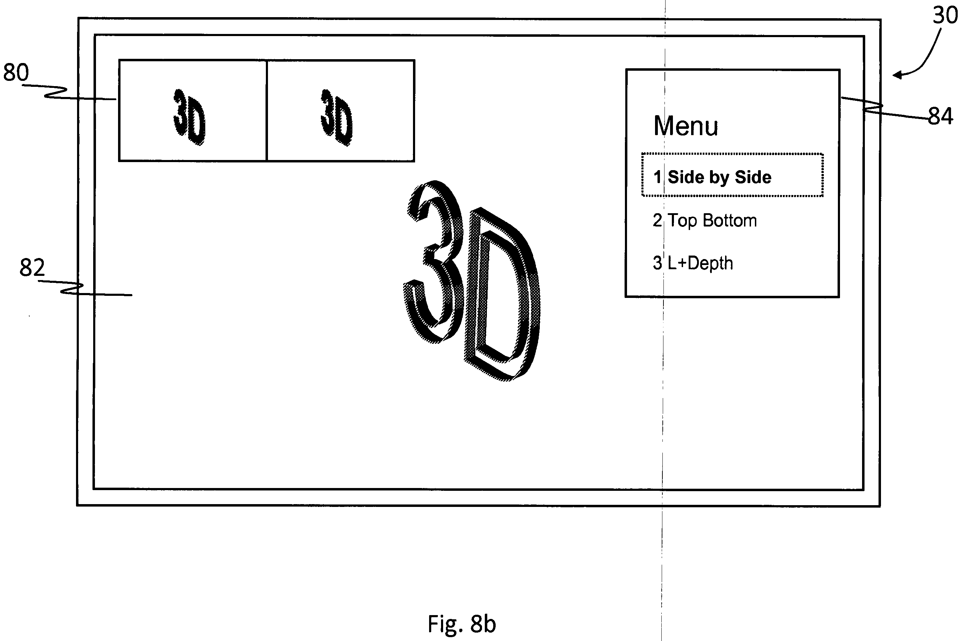

An alternative embodiment consists in superimposing to the normal display of the three-dimensional content the graphic selection interface and, in a limited region of the screen, in superimposing also the frame display, such as schematically shown in Figure 8b, wherein the box 80 is superimposed in opaqueness or half-transparency on the three-dimensional display 82 produced by the video processor 2 and so produced as full screen.

In both cases, in order to avoid altered or disturbed displays, it is suitable that the video processor 2 composes the frames of the video stream to be displayed on the visualisation apparatus 4 such that the box containing the frame display is of the two-dimensional type and is placed at zero depth, that is without any high-relief or bas-relief effect inside it. This can be achieved by properly placing the frame display in the frame of the stream to be displayed and by forcing the video processor 2 to make the adaptation to the display in the selected manner, such that the frame display is always appropriately reproduced, without altering its intelligibility by the user.

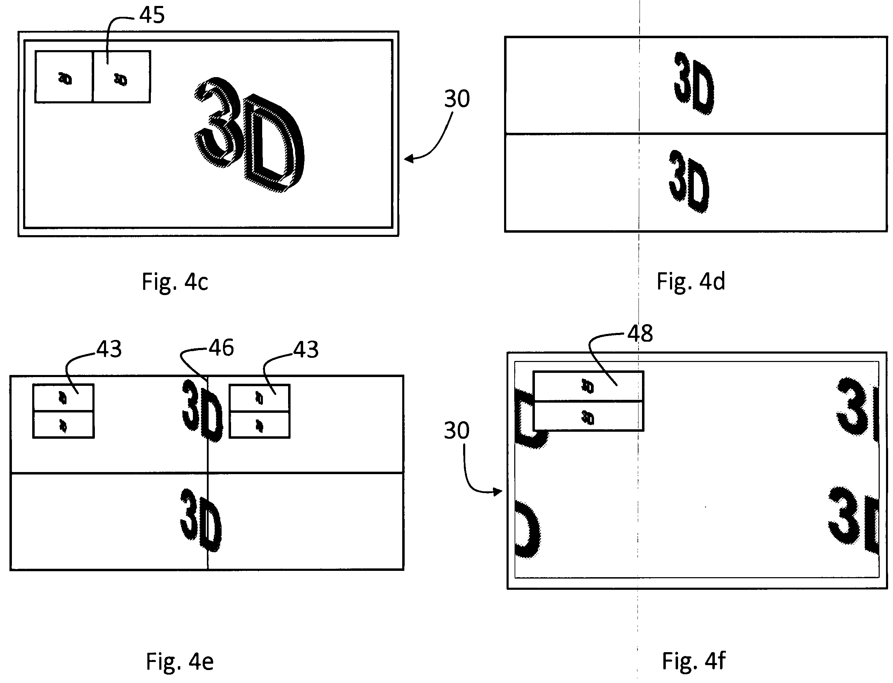

Now with reference to Figure 4a, it is assumed that in a first hypothesis the video stream has a side-by-side configuration and that the side-by-side configuration is selected as the initial default configuration or as a following configuration in a reset sequence, either by the user or by the video processing system 100. The video processor 2 can therefore insert the frame display such as shown in Figure 46, that is by inserting two boxes 41 containing the frame displays twice in the same position relative to the two presumed (and in this case real) positions of the right and left images in the side-by-side configuration, and can perform the rendering corresponding to such configuration. The result, that is what can be seen on a screen of an associated visualisation apparatus by a viewer provided with the suitable eyeglasses, is shown in Figure 4c, where both the frame display, contained in the portion 45, and the rendering one are correct; the latter correspond to what is present in the video stream, except for the horizontal dimension of the frame display that is doubled due to the interpolation operations made in the rendering phase.

Now with reference to Figure 4d, it is assumed that, on the contrary, the transport video stream is of the top-bottom type, while the currently selected and activated configuration for the rendering is still the side-by-side one. In this case the video processor 2 will make the composition of the frame display with the one to be rendered in the same manner as the previous one (see Figure 4e, showing the insertion of the boxes 43, where, as a reference, a vertical middle line 46, not provided in the video stream) has been drawn. The resulting display is approximatively shown in Figure 4f in the case of a screen operating under frame alternation: while the rendering is clearly wrong, the frame display contained in the box 48 is correct and represents in a very intelligible and faithful manner (except for the vertical dimension that is doubled) what is contained in the frame of the video stream to be reproduced. Therefore even in this case the user can make, at least without difficulties, the choice of the first level configuration, that is he/she can define that it is a top-bottom type configuration, even if the video processing system has activated the adaptation procedure provided for a video stream of the side-by-side type configuration, namely differing from the actually provided one. Therefore the user can easily find the error made in recognizing the transport configuration by a screen of the type shown in Figure 4f.

It is clear that the dimensions of the boxes 41, 43 and 48 containing the frame displays can be modified as desired, and therefore they can be selected such to occupy the overall area of the screen 30 such as show for instance in Figures 3a, 3c and 3e. It is also possible to make them re-sizable by the user by giving the user suitable resizing procedures that can make use of additional graphic elements on the screen 30 and of the activation of keys or of other command input elements provided on the control unit 6.

A similar composition procedure can be used, by suitable adjustments, in other selected configurations, such as the top-bottom one, the splitting one and so on.

The same considerations apply to the displays of the type shown in Figure 8a, with the difference that, in that case, the video processor 2 processes the rendered part 82 individually with respect to the other parts, since they are displayed in separate areas of the screen; this avoids the box comprising the rendering display to be combined with the other ones, if provided.

Moreover, it is possible to provide that each time a new transport configuration is selected by the graphic interface, the control module 5 receives a specific control signal 10 from the user, and in response to such control signal 10 of the user, the control module 5 gives the video stream processor 2 the corresponding transport configuration value that will be inserted, by such video processor 2, in the first interface video signal 13. Thus the three-dimensional video content is displayed by the visualisation apparatus 4 according to the transport configuration value selected by the user. Therefore all the information useful for the selection are displayed to the user, that is the graphic interface holding the possible configurations, the frame display, and finally the 3D content displayed according to the selection made by the user. The latter information provides the user a constant feedback about the selections made by him/her. Such information can be organized in graphic forms different than the one described here. However, the differences among the several graphic forms are not important for the novelty purpose of the present invention.

The user, after having selected the configuration he/she believes to be the proper one, by the control unit 6 he/she sends a confirmation control signal 10; in response to such control signal 10 the control module 5 causes, through the control signal 8, the video stream processor 2 to pass to the rendering display mode.

A further box 84, shown in Figures 8a and 8b can be advantageously added to the frame and rendering displays, which containes a list of the possible transport stream configurations like the page of a menu helping the user to define the currently active selection and the still selectable ones, as well as to effectively and interactively make the selection. The configuration currently selected and active for the rendering of the video processor 2 can be highlighted in any manner, for example by the provision of an arrow, of bold characters, characters in relief or with a different colour, background coloured contours, and so on. Said further box 84 can be inserted by the video processor 2 in the same way described for the box containing the frame display.

By a specific command activating the interactive transport configuration selection, the video processing system 100 produces on the associated visualisation apparatus 4 a mixed display such as those shown in Figure 8a or 8b. The user sees which the transport configuration assumed for the video processor 2 is and the generated rendering display corresponding thereto, as well as the relevant frame display. Now the user can confirm the selection for the configuration, if he/she considers it to be correct, or he/she can select another one, still acting on the control unit 6, for example by operating a cursor key down for selecting a different configurations among the ones listed in the menu box. Such selection is acquired by the control module 5 that drives the video processor 2 such that, upon such selection, the characters denoting the new selected configuration are highlighted and it is activated for making the corresponding rendering display set for the video processor 2. In the example of Figure 8a the user presses the cursor key down on the control unit 6, by highlighting the line 2 of the "Top Bottom" menu: the control module 5 operates in such a way that the video processor 2 performs the rendering provided for the top-bottom configuration. This interactive dialogue can go on till the user stops it by confirming the selection or by giving up the identification of the transport configuration. The list of the menu box can also hold other configurations not supported by the visualisation apparatus; these can be marked in such a way to point out the fact that they cannot be activated; if one of said not supported configurations is selected, the control module 5 can operate in such a manner that the video stream generated by the apparatus contains an indication visible on an associated visualisation apparatus 4 intended to point out that the selected configuration is not supported.

Moreover, it is possible to provide in the list also configurations not supported by the visualisation apparatus 4 and that, in case one of said not supported configurations is selected, the control module 5 operates in such a manner that the video stream reproduced by as associated visualisation apparatus 4 takes a two-dimensional mode.

In case of a mixed graphic screen, that is a screenshot comprising a three-dimensional rendering of the video stream and a portion of the image wherein a frame display and/or a box containing menu pages is reproduced, by previously shown mechanisms it is rendered on the visualisation apparatus 4 in such a way not to irritate the user. It is known that portions of images superimposed on a three-dimensional image can irritate if they are placed on visual planes arranged with a distance very different with respect to surrounding objects in the same scene and only if they are placed on a visual plane that is too deep or too outwardly projected with respect to the apparent plane of the screen.

The expedient of placing the box of the frame display and the other boxes in such a manner that the processor arrange them on the visual plane coinciding with the screen 30 can be improved by surrounding the box with a black or neutral area containing a region of pixels that are uniform and stationary over time, such that possible areas of 3D rendered images and placed on visual planes that are very spaced apart do not trouble the viewer. In order to improve the situation, it is possible to place such boxes in peripheral regions of the screen where usually there are provided background scenes, that is comprising objects placed far away and at an approximately uniform distance one from each other.

As an alternative or in addition, it is possible to give the user the possibility of redefining the box of the frame display both as regards the position and the dimension, in case with the possibility of changing the proportions.

In a further embodiment of the present invention, the transport configurations of the three-dimensional video content selectable by the user can be organized in a hierarchical manner on the basis of the parameters of each configuration. Each hierarchical level ("layer") therefore denotes a specific parameter of one of the possible configurations that the user can select. The selection of a specific parameter at a higher hierarchical level leads to the set of possible parameters among which the user can make his/her choice at the lower hierarchical level. The path determined by the selections made by the user, passing from the first hierarchical level to the last hierarchical level of the structure, defines the parameters of the transport configuration selected by the user, said selection occurring by means of this path.

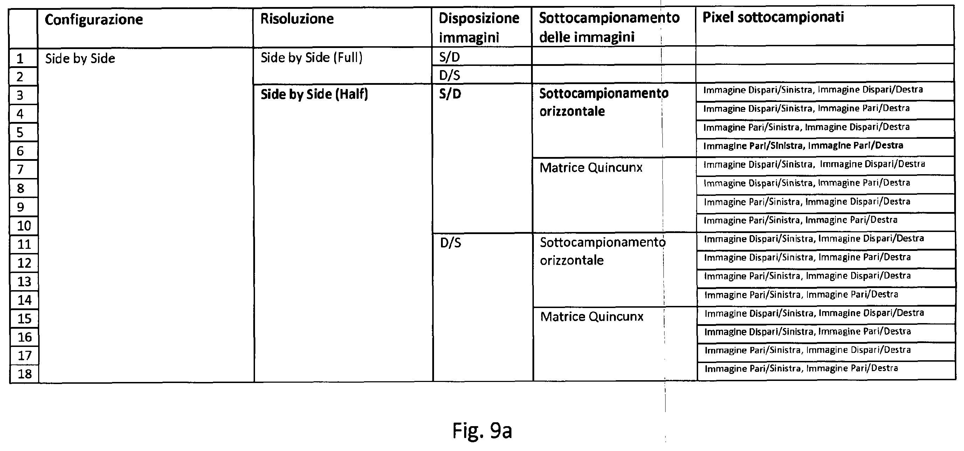

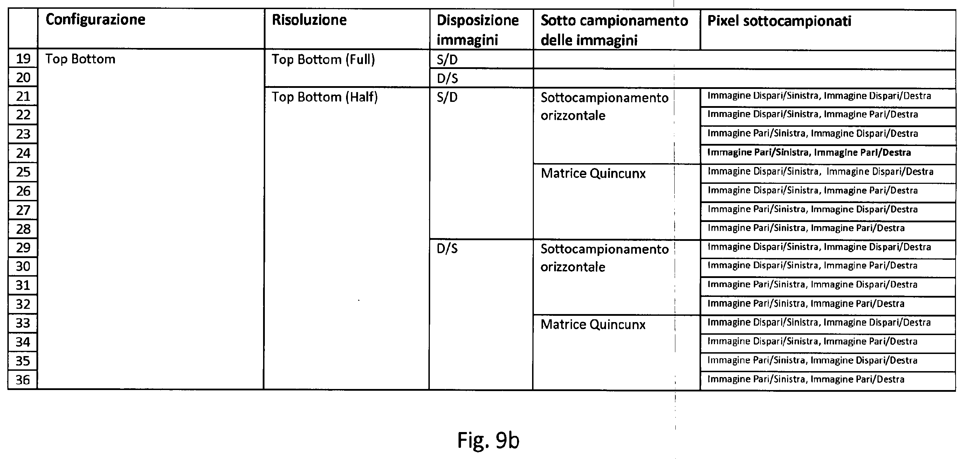

An example of such hierarchical structure or organization of the possible configurations is shown in Figures 9a and 9b wherein there is provided:
- a first column "Configuration" corresponding to the first hierarchical level that makes a first distinction among the configurations on the basis of the arrangement of the images in the single frame: for instance, in the case of "side by side" of the two images transported in the single frame, one is arranged in the left portion and the other one in the right portion of the frame itself; for instance, in the case of "Top Bottom", the first image is arranged in the upper portion of the individual frame, while the second one in the lower portion;
- a second column "Resolution", showing a second hierarchical level, where the "Full" term means the configuration wherein the single images in the frame contain all the pixels to be displayed, while the "Half" term denotes the configuration wherein the single images in the frame contain only a part of the pixels to be displayed since they are subjected to image subsampling;
- a third column "Image Arrangement" that defines a third hierarchical level, showing how the images are inserted in the different single frames, namely in the case of a "side by side" configuration a left image and right image are transmitted for each single frame. In this situation the indication "L/R" denotes that in the first frame portion, that is the left one, the left image is arranged, while in the second portion, that is the right one, the right image is arranged. On the contrary the indication "R/L" means that in the left portion of the frame the right image is arranged, while in the right portion the left image is arranged. Similar considerations apply to the "top bottom" case, wherein as regards the case "L/R" the left image is arranged in the upper portion of the frame, while the right image is arranged in the lower portion; on the contrary as for the indication "R/L" where the right image is arranged in the upper portion, while the left image is arranged in the lower one;
- a fourth column "Image Subsampling" that defines a fourth hierarchical level, wherein the subsampling, if carried out, is denoted, namely in the case of "horizontal subsampling" the subsampling is carried out by pixel columns, in the case of "quincunx subsampling" the subsampling samples the pixels of the individual image according to a chessboard-like pattern, and, finally, in the case of "vertical subsampling" the subsampling is carried out by pixel lines;
- the last column, that is the column "subsampled pixels", defines a fifth hierarchical level, wherein the odd or even position inside the single left and right images, of the pixels subjected to subsampling is defined.

The hierarchical structure just described is a simple illustrative example. The structure where the possible configurations are hierarchized or ordered can follow different distinctive criteria not described herein. Moreover the selection of the possible configurations can be extended also to other types, such as, for example, the splitting one or the "2D + delta" type.

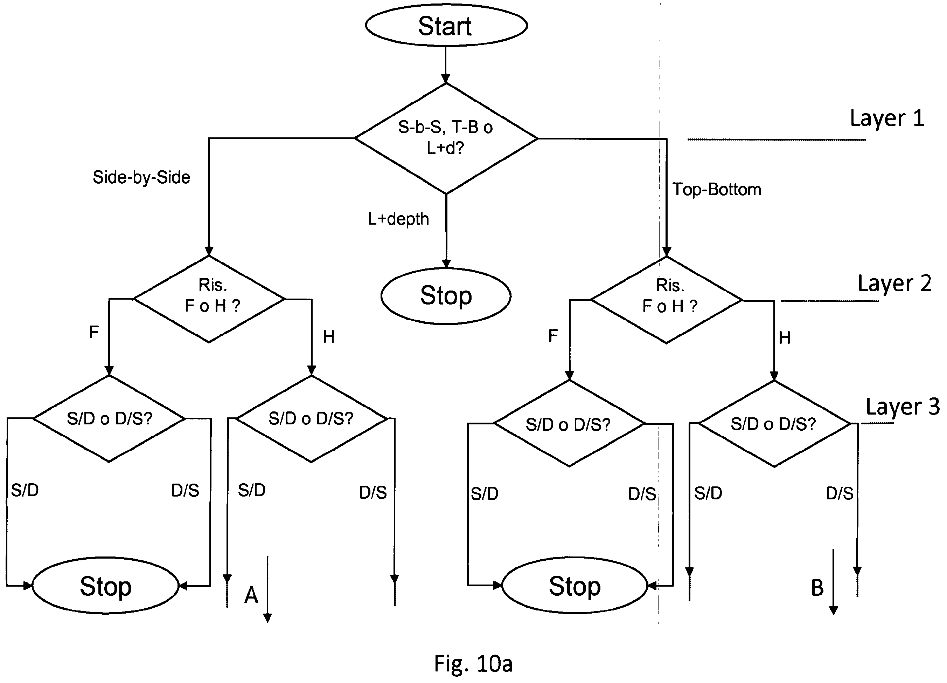

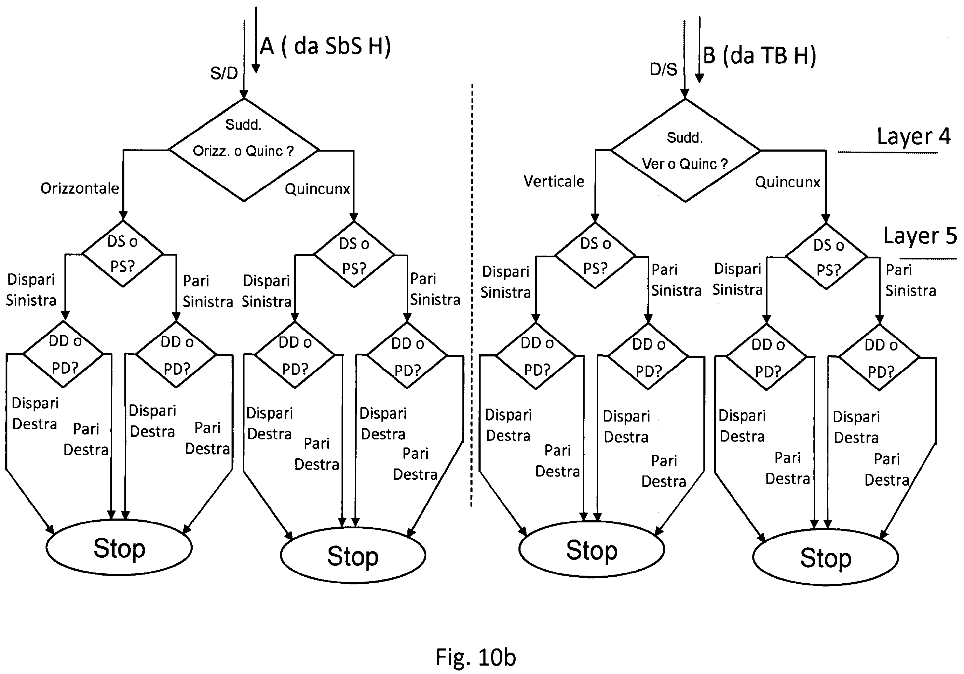

The possible selection paths that can be carried out by such hierarchical structure or organization of the possible configurations are shown, by way of example, in the tree-diagram shown in Figures 10a and 10b.

Figure 10a shows, after the "Start" beginning condition of the path, a first hierarchical level (Layer 1): the lower hierarchical levels are shown for the configurations of "side by side" and "top bottom" type while the configuration of "L + depth" type has no lower configuration levels.

Then there is shown a following hierarchical level (Layer 2), wherein the possible selectable parameters are defined by the branches of the tree diagram branching from the parameter selected at the higher hierarchical level. If at the first hierarchical level the "side by side" parameter is selected, the possible "Full resolution" (F) and "Half resolution" (H) parameters correspond to the second hierarchical level (Layer 2). In the case of "Full" value the selection procedure ends, while if the "Half" parameter is selected the next hierarchical level is entered, and that is the third one (Layer 3), where the choice is between "L/R" and "R/L" options.

Considering the selections made up to now, from the third hierarchical level by selecting the "L/R" parameter the fourth hierarchical level (Layer 4) is entered where the possible choices are "Horizontal subsampling" and "Quincunx" parameters, again making a selection. For example, by selecting the "Quincunx" parameter the fifth hierarchical level is entered where the choice is among four different parameters: by selecting one of such parameters, for example "odd/left image, odd/right image" (OL/OR) the selection procedure ends.

The other values of the parameters are "odd/left image, even/right image" "even/left image, odd/right image" and "even/left image, even/right image". The selection can be made for example as shown in Figure 9b by two subsequent selections, firstly between "odd/left image" and "even/left image" and then between "odd/right image" and "even/right image". The path shown herein as an example, leads to the selection of a transport configuration characterized by the following parameters "side by side, half, L/R, horizontal subsampling, odd/left image, odd/right image", that is a transport configuration of the "side by side" type wherein the left image is arranged in the left portion of the frame and the right image in the right portion of the frame, each image is subjected to a horizontal subsampling made on the pixels having a position defined as "odd position" both for the left image and for the right image.

The fact of knowing such configurations of a hierarchical level following the first one is useful to the video processor 2 for properly making the reconstruction faithful as much as possible to the original of the images of the starting video stream. Therefore, when considered appropriate, even for such parameters defining the transport configuration it is possible to apply the same interactive mechanism for selecting the transport configuration as that suggested for the first level.

In order to increase the probability that the user properly selects even the sub-configurations of a hierarchical level lower than the first one, it is advantageous to act in such a manner that the video processing system 100 implementing the method of the invention generates a video signal that supports and guides the user in the selection, with the provision of displays that change depending on the context, that is on the basis of the already made selections and of the one to be currently made. For example, it is assumed that the user has selected the "side-by-side, half resolution" configuration, and now he/she has to decide whether it is a L/R or R/L, namely in which of the half-boxes of the frame the left and right images of the stream are arranged respectively. In this case the video processing system 100 could generate a video stream comprising a display wherein the left and right image placed side by side are arranged one on the other in the two possible arrangements after having been cut from the frame display. The user therefore can appreciate the relative difference of the position of the objects in the scene in the two displays (left and right) and can deduce where the left and right images have been arranged in the frame. Indeed, it is known that far away objects (that is those placed behind the visual plane corresponding to the screen) are placed more on the right in the left image and more on the left in the right image; as regards the objects placed in front of such plane just the opposite occurs. Therefore, by showing contemporaneously the two images suitably arranged on the screen the user can easily detect them. In order to facilitate the task, it is possible to apply several methods: for instance, it is possible to give the user the possibility of enlarging some homologous regions (that is having the same relative position in the right or left sub-image). It is also possible to make the two images movable on the screen one on the other one by the control unit 6 and to superimpose them such that an object provided in both the sub-images and placed behind the visual plane of the screen occupies the same region of the screen: now the video processing system 100 can automatically deduce which is the left image and the right image from the relative position of the two images moved by the user.

In order to facilitate the operation to the user and at the same time to relieve the computational burden for the video processor 2, it is possible that during these and other selection operations made by the user, he/she can stop the flowing of the images of the video stream by stopping the display on a specific frame, both for the frame display, and for the possible three-dimensional rendering display, when the latter is reproduced on the screen.

A preferred embodiment of the invention operates such that when both the displays are provided on the screen, they refer to the same scene or shot, independently of the fact that the video stream is progressively displayed ("PLAY") or stopped on a still image ("STOP"). In this case in the video processing system 100 a frame memory and a synchronization mechanism could be necessary allowing the frame display and the corresponding 3D rendering one of the same frame to be simultaneously provided on the screen, by compensating the possible delay introduced by the 3D rendering process.

At the same time it is possible to assist the selection of the user for the fourth hierarchical level of the configuration. For instance, it is possible to start from a default or starting fourth level configuration (defined at the factory or by the user), to activate the rendering by the video processor 2 provided at such configuration and to cause the video processor 2, upon a suitable input by the control module 5, to contemporaneously display on an associated display screen 30 a frame display and contemporaneously the relevant rendering display corresponding to the currently active fourth level configuration. In order to facilitate the comparison between the decimated sub-images and the relevant images obtained after the interpolation, it is possible to show contemporaneously on the screen at least one of the (left and/or right) sub-images obtained from the decoded frame and at least the corresponding interpolated sub-images, without any further treatments necessary to obtain the three-dimensional effect (for example the "frame alternation" or "line interleave" processes). In this case it is advantageous to show the two pre- and post-interpolation displays in a side by side manner and in a suitably enlarged manner, that, in case, can be changed by the user as regards position and enlarging factor, such to make the image area to be reproduced selectable and to make valuable for the user whether the interpolation operation made by the video processor 2 for reconstructing the pixels eliminated in the decimation or subsampling operation on the image has lead to the introduction of artefacts or alterations. Indeed, with no such artefacts and alterations it is possible to deduce that the reconstruction has been correctly executed and therefore that the supposed fourth level configuration really corresponds to the one provided at the output of the decoder 1, or that anyway the interpolation made by the video processor 2 is suitable for the video stream to be reproduced.

In order to make the selection of the image or sub-image portions to be enlarged and/or reduced and/or reproportioned and/or moved more immediate, it is possible to mark such portion with a graphic selection element, for example with a rectangular shape. This rectangle for instance can be movable in the frame display and can have a variable extension. Moreover, it is possible to provide the area corresponding to such portion in the rendering display to be also simultaneously changed, such to allow the user to appreciate the correspondence between the frame display and the rendering one and to define the most appropriate one.

The expedient of showing a list menu on the same screenshot together with the currently selected rendering display and with the relevant frame display can be repeated also for the selections made for such hierarchical levels following the first one. For instance in L/R or R/L selection it may be possible to display on the screen receiving the video signal generated by the video processor 2 a list containing the two options combined with a graphic element or with a graphic alteration that points out which of the two options is the currently active one.

By means of a hierarchical organization of the characteristic parameters of the possible transport configurations, it is possible to guide the user in selecting the correct three-dimensional content configuration. While the table of Figures 9a and 9b shows thirty-six different possible configurations, by adopting this type of hierarchical organization the user is not in the position of sliding all the thirthy-six possible configurations, but at each step of the selection path the choice is reduced between two or at most four different parameters depending on the involved hierarchical level. Moreover, at each step for the selection the user can exploit the information given to him/her by the frame display. Thus the selection of the proper transport configuration occurs in a short time and with a higher possibility that the selected configuration is really the proper one. As regards the graphic interface, by means of which the user can make a hierarchical selection of the different parameters characterizing a transport configuration, considerations like those already previously described about the graphic interfaces are valid.

Particularly, it is possible to provide a graphic interface composed of a first box listing the characteristic parameters of the first hierarchical level, in the example "side by side" and "top bottom": upon the highlighting or selection of one of these two parameters, a second box appears showing the parameters of the lower hierarchical level, in the example "Full" and "Half". The same procedure is followed for selecting the remaining parameters and for completing the hierarchical selection path. The box of the lower hierarchical level can simply replace the one displayed for the box dedicated to the higher hierarchical level, or as an alternative, the lower hierarchical box can be displayed in a different region of the screen, the box corresponding to the higher hierarchical level being still displayed. As already described in the previous embodiment, the graphic interface is activated and is modified on the basis of the user inputs coming from the control unit 6, in response to such inputs the control module 5 controls the activity of the video processor 2, which generates the video signal 9 intended to display the graphic interface.

A possible alternative, as regards some or all the selection steps, is to suggest to the user the parameter having the highest likelihood value to be the correct one, by graphically highlighting or by listing it in the first rank of the list, further assisting the user in selecting the proper transport configuration. The likelihood value of each parameter, specific for a specific selection path, can be calculated by suitable statistical calculations made by the control module 5 on the basis of the signals previously received: as an alternative, it is possible to provide said likelihood values to be defined in the manufacturing phase, by the user or by means of software updates in the event the video processing apparatus can be updated via software for instance through an Internet connection or by receving the appropriate broadcast signal.

It is not necessary at all for all the hierarchical levels to be necessarily explored, and thus for the user to make all the possible selections from the first hierarchical level following the one currently being selected up to the last one. For instance, it is possible to provide at each selection step the most likely stream configuration to be automatically suggested, that is the most frequently used one as regards all the following selections belonging to the next levels, and the relevant three-dimensional mode provided for such configuration to be simultaneously activated. It is for example assumed that the user, on the basis of the frame display on the visualisation apparatus, has selected the side by side configuration for the first level. Now it is possible to cause the apparatus to automatically suppose, suggest and activate the 3D display mode corresponding to the most likely configuration (for example side-by-side, half resolution, L/R, even left, even right subsampling for the first level side by side configuration, highlighted in bold in Figure 9a). If, as probable, the corresponding rendering display readily shown on the screen is correct, the user can immediately confirm the selection just made and avoid the selections of the next levels to be made. This shortened selection procedure can be applied as one goes on even for the higher levels in combination with the interactive presentation of the associated visualisation apparatus 4 of the relevant rendering display.

All these default configurations can be set at the factory, updatable after the exit from the manufacturing site, for instance, in occasion of a local or remote firmware update of the apparatus. Moreover, as an alternative or in addition, they can be made so as to be modifiable by the user for instance within the control interactive menu of the video processing apparatus. It may happen that, due to the uncertainty in the field of transmission and transport formats of three-dimensional video streams, some formats among the theoretically possible ones in practice are never used, therefore the range of the configurations that can be really identified is very smaller than those listed, as an example, in Figure 9a. Default configurations and generally the selectable ones can be stored in the video processing system 100 and can be updated by any method, such as a remote updating (for example via broadcasting, Internet) or a local updating (for instance loading from USB key, PC).

Moreover, it is possible to provide the user to stop the selection procedure as soon as he/she considers it appropriate, since, for example, by the display of the three-dimensional image on the visualisation apparatus, he/she believes that the configuration currently selected is correct.

It is also possible to provide the different display modes (the mixed one of Figures 8a and 8b and/or the individual one of Figures 3a, 3c and 3e) to be quickly switched by a key switching the display mode of the configuration, such to allow the user to have on the screen of the associated visualisation apparatus 4 the (rendering or frame) display or displays that are considered necessary for recognising the configuration, and for immediately define the currently active selection, obtainable from the menu item highlighted in the corresponding box in Figures 8a and 8b.

It is clear that the present invention can be applied to video streams both of "frame compatible" type and "service compatible" type. It can be applied to any video processing system 100 wherein it is possible to produce a video signal comprising a frame display belonging to a video stream intended to be reproduced in the three-dimensional mode, since its reproduction on an associated visualisation apparatus 4 can help a user to define the stream configuration, if it is or is considered as being wrong by the user or by the apparatus.

The present invention is also useful in case of a video processing system 100 that is perfectly able to autonomously recognise the video stream configuration to be displayed, because a user may have the desire to check if the apparatus is properly operating, or because he/she may want to exactly know which is the transport format used for the currently reproduced video stream or generally to familiarize with the 3D technology or with the usable transport formats. In addition, the invention is useful also for checking the proper operation of the video processor 2 and the correct programming thereof, both when programming it at the factory, and by the user and/or by the service centre when the video processing system 100 is inspected or repaired due to failures or malfunctions.

The arrangement of functional elements described above and shown in Figure 1 and in Figure 2 is completely illustrative and it is a simple block diagram showing an embodiment of the apparatus implementing the method of the present invention. It is clear that two or more functional blocks can be made in a single hardware device and that the same functional block can be implemented as a cooperation between two physically separated circuit elements (for example a videorecorder, a set top box, a television set, a monitor). Thus, for instance, it may happen that in the future two or more functional blocks between the video processor 2 and/or the control module 5 and/or the decoder 1 are integrated into a single integrated circuit, wherein however there are clearly provided modules made either as hardware or software that implement the invention described herein.

The control module 5 in turn can be made by the microprocessor that usually oversees the operation of a video processing apparatus intended to implement the method of the present invention. It can be made as programmed logic software or hardware, or it can be made by a suitable circuit.

The video processor 2 can be external to the apparatus comprising the decoder 1 and/or the control module 5; the functions described herein for implementing the invention for such functional unit can be for example carried out by a video processor integrated with an external visualisation apparatus incorporating the screen or projector for the video reproduction of the images corresponding to the video signal generated by the video processing system 100 implementing the method of the present invention. In this case there is provided a suitable data interface connecting the decoder and the video processor, that makes it possible to transfer the video stream from the decoder 1 and the passage of the control signals coming from the control module 5. The tasks performed by the video processor 2 integrated in the video processing system 100 can be executed partially or completely by a video processor integrated in an external visualisation apparatus comprising, in this case, in addition to the screen, its own video processor that receives the video stream and the control signals from the control module 5 by a data interface for the exchange of control signals (that can physically or logically coinciding with the connection one or not) and that cooperates therewith in order to implement the invention.

Generally, the process for producing a video signal intended to generate a three-dimensional display starting from the video stream from the decoder can be divided in different operations, variable depending on the transport configuration of the video stream to be reproduced and on the type of the three-dimensional screen associated to such stream. It is possible to mention, among others, the extraction of the two left and/or right sub-images, the calculation of the second sub-image starting from a first one, the interpolation of the sub-images and their alternation in space or time depending on the modes required by the visualisation apparatus for obtaining the three-dimensional effect.

It has to be noted that some of such operations can be omitted depending on the fact that whether the video stream is of the "frame compatible" type or "service compatible" type. However, a part of such operations can be performed by a first video processor integrated in the apparatus implementing the method of the present invention, and the other part by a second video processor integrated in the visualisation apparatus 4, outside the apparatus. Similarly, a video processor 2 integrated in the apparatus can be composed of different operating modules that cooperate in series and/or in parallel for performing the process producing the three-dimensional display, without departing from the protection scope of the present invention.

In the video processing system 100 there can be provided even several decoders, each one being intended to decode a certain type (for instance "frame compatible" or "service compatible") or a set of video streams ("L+depth", "2D+delta"). In this case the control module 5 can control and activate time by time the decoder requested for obtaining the frame display required by the invention.

The video processing system 100 implementing the method according to the invention can be able to display also two-dimensional video streams in addition to the three-dimensional ones. It is also possible to provide that, if the apparatus is not able to verify whether the video stream is two or three-dimensional, it causes the associated visualisation apparatus to reproduce the video stream in the two-dimensional mode, that is without any treatment process for displaying the input video stream in the three-dimensional mode.

The visualisation apparatus 4 comprises a screen or a projector of any type or kind provided that it is able to produce a three-dimensional effect to a user with or without particular eyeglasses worn by him/her when he/she receives the video signal produced by the video apparatus implementing the method of the present invention. The screen can be indifferently of the LCD type (LED or not), CRT, rear projection or plasma; it can be composed of a projector; it can use any 3D rendering technique (for example frame alternation, line interleave, column interleave, pixel interleave); and it can comprise or not a video processor that takes part or not in the process producing the three-dimensional display according to the modes described above.

Therefore it can be easily understood that what previously described can be subjected to various changes, improvements, replacement of similar parts and elements without however departing from the idea of the invention, as it is better specified in the following claims.

For example, the frames containing the images constituting the video stream usually have "Full HD" dimensions, that is 1920x1080 dimensions, that is an array of 1920 columns for 1080 lines of pixels, and they are correctly compressed (that is coded) in MPEG 4 format. However, the present invention applies without distinction also to frames having different dimensions, smaller or higher ones (for example 1280x720 or 2K), and independently on the presence of coding or compression procedures for the images of the video stream and even on their type (for instance MPEG2, MPEG4, WMV, and so on).

## Claims

1. A method for processing a three-dimensional video content in order to allow a user to select a proper transport configuration of the content itself to be processed by a video stream processor (2) so as to produce a three-dimensional effect on a screen of an associated visualization apparatus (4), wherein the video stream processor (2) is inputted with an input video stream (Fi) comprising a series of single video frames each one containing one or more images or video data according to a specific three-dimensional video transport configuration, wherein said video stream processor (2) can pass from a first operating mode wherein said video stream processor (2) performs a conversion and adaption of said input video stream (Fi) to make it suitable for being reproduced on said associated visualization apparatus (4) producing said three-dimensional effect to a second operating mode wherein said video processor processes said video stream (7) to obtain an output signal (9) wherein at least one portion of said one or more images or video data contained in a single video frame of said video stream (7), currently selected to be displayed, are displayed in a portion of such screen by maintaining an arrangement and content that such one or more images or video data have into said single frame, said arrangement and content of said one or more images or video data giving the user a visual indication of the input video stream transport configuration and helping the user to select said specific transport configuration.

2. A method according to claim 1, wherein said at least one portion of said one or more images and/or video data is generated by the video stream processor (2) in a manner such that it appears to be positioned in the visual plane corresponding to the apparent plane of the screen (30) of said visualisation apparatus (4).

3. A method according to one or more of the preceding claims, wherein said at least one portion of said one or more images and/or video data generated by the video stream processor (2) can be enlarged and reduced and/or reproportioned and/or moved by the user.

4. A method according to one or more of the preceding claims, wherein said video stream processor (2) passes from said first operating mode to said second operating mode in response to a control signal (8) originated by a control unit (6) associated with a control module (5), said control unit (6) being operable by a user.

5. A method according to claim 4, wherein there are provided means for recognising the transport configuration of the input video stream (Fi) and said control signal (8) being generated in the event that said specific transport configuration is not recognised by said recognition means.

6. A method according to claim 5, wherein said three-dimensional display is attainable by activating a corresponding procedure producing said three-dimensional display.

7. A method according to claim 6, wherein at least said one portion of said one or more images or video data (43, 45) is correctly reproduced on the associated visualisation apparatus (4), save for any unidirectional resizing, according to said procedure producing said three-dimensional display.

8. A method according to claim 6, wherein said output video signal (9,13) further comprises an indication of the transport configuration, or active configuration, currently used in said procedure producing said three-dimensional display.

9. A method according to claim 6, wherein said output video signal (9,13) displays a list of a plurality of transport configurations of the input stream (Fi) for which the video processor (2) can activate said procedure producing said three-dimensional display.

10. A method according to claim 8 or 9, wherein, when said active configuration is highlighted, the transport configurations of said list are selectable by a user through a control unit (6) and, when one configuration is selected from said list, the control module (5) associated with said control unit operates in a manner such that the video stream processor (2) activates the three-dimensional display production procedure corresponding to the transport configuration selected by the user.

11. A method according to claims 8 and 9, wherein said list also includes unprogrammed configurations, and wherein, if one of said unprogrammed configurations is selected, the control module (6) operates in a manner such that the output video signal generated by the video processor (2) comprises an indication that the selected transport configuration is not supported.

12. A method according to claim 10 or 11, wherein:
- a plurality of transport configurations are stored as sets of options having different hierarchical levels, selectable in succession by the user one after the other in a predetermined sequence by means of said control unit (6) associated with said control module (5);
- said control module (5) operates in a manner such that, in response to control signals (10) issued by the user-operable control unit (6), the video stream processor (2) generates an output video signal comprising indications about the configuration of the hierarchical level of the transport configuration currently being selected by the user;
- the at least one portion of said one or more images or video data comprised in the output video signal produced by the video processor (2) is displayed by taking into account the previous selections of the lower hierarchical levels of the transport configuration as well as the selection of the hierarchical level currently being selected.

13. A method according to the preceding claim, wherein for at least one option selectable by the user at a certain hierarchical level of a transport configuration, all the options selectable for the next hierarchical levels are predefined, thus forming a default configuration, so that, when such at least one configuration is selected by the user, the control module (5) operates in a manner such that the video stream processor (2) activates the three-dimensional display production procedure programmed for said default configuration.

14. A method according to one or more of the preceding claims, wherein said at least one portion of said one or more images or video data is superimposed in half-transparency on said three-dimensional display.

15. A method according to one or more of the preceding claims, wherein said at least one portion of said one or more images or video data is superimposed in opaqueness on said three-dimensional display.

16. A method according to one or more of the preceding claims, wherein the programming of said video stream processor (2) can be updated through a remote or local update process, and/or can be determined or redetermined by the user.

17. A method according to any one of the preceding claims, wherein said video stream processor (2) is further adapted to generate a two-dimensional video signal.

18. A video processing apparatus for processing a three-dimensional video content in oder to allow a user to select a proper transport configuration of the content itself to be processed by a video stream processor (2) so as to produce a three-dimensional effect on a screen of an associated visualization apparatus (4), said video processing apparatus comprising said video stream processor (2) which is inputted with an input video stream (Fi) comprising a series of single video frames each one containing one or more images or video data according to a specific three-dimensional video transport configuration, wherein said video stream processor (2) comprises processing means providing a first operating mode wherein said video stream processor (2) performs a conversion and adaption of said input video stream (Fi) to make it suitable for being reproduced on said associated visualization apparatus (4) producing said three-dimensional effect and further providing a second operating mode wherein said video stream (7) is processed to obtain an output signal (9) wherein at least one portion of said one or more images or video data contained in a single video frame of said video stream (7), currently selected to be displayed, are displayed in a portion of such screen by maintaining an arrangement and content that such one or more images or video data have into said single frame, said arrangement and content giving the user a visual indication of the transport configuration of the input video stream and helping the user to select said specific transport configuration.

19. An apparatus according to claim 18, comprising a projector for a screen for reproducing the output video signal (9,13) generated by said video stream processor (2).

20. An apparatus according to claim 18 or 19, wherein said visualisation apparatus (4) is integrated into said video processing apparatus.

21. An apparatus according to one of claims 18 to 20, wherein said visualisation apparatus (4) is associated with said video stream processor (2) through a wired or wireless connection interface.
1 in order to
2 to be processed by a video stream processor (2) so as to produce a three-dimensional effect
3 three-dimensional video
4 comprises processing means providing
5 and further providing
6 said video stream (7) is processed to obtain an output signal (9) wherein
7 of the input video stream

## Patentansprüche

1. Verfahren zum Verarbeiten eines dreidimensionalen Videoinhalts, um einem Benutzer zu erlauben, eine geeignete Beförderungskonfiguration des Inhalts selbst auszuwählen, um durch einen Videostromprozessor (2) verarbeitet zu werden, sodass ein dreidimensionaler Effekt auf einem Bildschirm einer verbundenen Visualisierungsvorrichtung (4) erzeugt wird, wobei dem Videostromprozessor (2) ein Eingangsvideostrom (Fi) eingegeben wird, der eine Reihe von einzelnen Videoframes umfasst, die jeweils ein oder mehrere Bilder oder Videodaten gemäß einer spezifischen dreidimensionalen Videobeförderungskonfiguration beinhalten, wobei der Videostromprozessor (2) übergehen kann von einem ersten Betriebsmodus, in dem der Videostromprozessor (2) eine Umwandlung und Anpassung des Eingangsvideostroms ausführt, um diesen zum Wiedergeben mit der Visualisierungsvorrichtung (4) anzupassen, in einen zweiten Betriebsmodus, in dem der Videoprozessor den Videostrom (7) verarbeitet, um ein Ausgangssignal (9) zu erhalten, wobei zumindest ein Teil der einen oder mehreren Bilder oder Videodaten, die in einem einzelnen Videoframe des Videostroms (7) enthalten sind, der zurzeit zur Anzeige ausgewählt ist, in einem Bereich eines solchen Bildschirms dargestellt werden, indem eine Anordnung und ein Inhalt, den diese ein oder mehreren Bilder oder Videodaten in einem einzelnen Frame haben, beibehalten werden, wobei die Anordnung und der Inhalt der einen oder mehreren Bilder oder Videodaten dem Benutzer einen visuellen Hinweis der Beförderungskonfiguration des Eingangsvideostroms geben und dem Benutzer helfen, um eine spezifische Beförderungskonfiguration auszuwählen.

2. Verfahren nach Anspruch 1, wobei der mindestens eine Teil der einen oder mehreren Bilder und/oder Videodaten durch einen Videostromprozessor (2) in einer Weise erzeugt wird, sodass dieser in der visuellen Ebene, die der erkennbaren Ebene des Bildschirms (30) der Visualisierungsvorrichtung (4) entspricht, positioniert wird.

3. Verfahren nach einem oder mehreren der vorhergehenden Ansprüche, wobei der mindestens eine Teil der einen oder mehreren Bilder und/oder Video-daten, die mit dem Videostromprozessor (2) erzeugt sind, von einem Benutzer vergrößert und verkleinert und/oder reproportioniert und/oder bewegt werden.

4. Verfahren nach einem oder mehreren der vorhergehenden Ansprüche, wobei der Videostromprozessor (2) vom ersten Operationsmodus zum zweiten Operationsmodus in Reaktion auf ein Steuersignal (8) übergeht, das von einer Steuereinheit (6) stammt, die mit einem Steuermodul (5) verbunden ist, wobei die Steuereinheit (6) durch einen Benutzer bedienbar ist.

5. Verfahren nach Anspruch 4, wobei Mittel bereitgestellt sind, um die Beförderungskonfiguration des Eingangsvideostroms (Fi) zu erkennen und das Steuersignal (8) in dem Fall erzeugt wird, dass die spezifische Beförderungskonfiguration nicht durch die Erkennungsmittel erkannt wird.

6. Verfahren nach Anspruch 5, wobei das dreidimensionale Anzeigen durch Aktivieren eines entsprechenden Vorgangs, der das dreidimensionale Anzeigen erzeugt, erreichbar ist.

7. Verfahren nach Anspruch 6, wobei zumindest ein Teil des einen oder der mehreren Bilder oder Videodaten (43, 45) mit der verbundenen Visualisierungsvorrichtung (4) korrekt, also sicher für jede unidirektionale Größenveränderung, gemäß dem Vorgang, der das dreidimensionale Anzeigen erzeugt, wiedergegeben wird.

8. Verfahren nach Anspruch 6, wobei das Ausgangsvideosignal (9, 13) ferner eine Angabe der Beförderungskonfiguration oder aktiven Konfiguration beinhaltet, die zurzeit in dem Vorgang, der das dreidimensionale Anzeigen erzeugt, verwendet wird.

9. Verfahren nach Anspruch 6, wobei das Ausgangsvideosignal (9, 13) eine Liste mit einer Mehrzahl von Beförderungskonfigurationen des Eingangsstroms (Fi) anzeigt, für den der Videoprozessor (2) den Vorgang aktivieren kann, der das dreidimensionale Anzeigen erzeugt.

10. Verfahren nach Anspruch 8 oder 9, wobei im Falle, dass die aktive Konfiguration hervorgehoben wird, die Transportkonfigurationen der Liste von einem Benutzer durch eine Steuereinheit (6) auswählbar sind, und im Falle, dass eine Konfiguration der Liste ausgewählt wurde, das Steuermodul (5), das mit der Steuereinheit (6) verbunden ist, in einer Weise betrieben wird, sodass der Videostromprozessor (2) den dreidimensionalen Anzeigeerzeugungsvorgang aktiviert, der der ausgewählten Beförderungskonfiguration von dem Benutzer entspricht.

11. Verfahren nach den Ansprüchen 8 und 9, wobei die Liste auch nicht programmierte Konfigurationen umfasst und wobei im Falle, dass eine der nicht programmierten Konfigurationen ausgewählt wird, das Steuermodul (6) in einer Weise arbeitet, sodass das Ausgangsvideosignal, das vom Videoprozessor (2) generiert wird, einen Hinweis umfasst, dass die ausgewählte Beförderungskonfiguration nicht unterstützt wird.

12. Verfahren nach Anspruch 10 oder 11, wobei:
- mehrere Beförderungskonfigurationen als Gruppen von Optionen, die verschiedene hierarchische Ebenen haben, gespeichert werden, die in Folge durch einen Benutzer eine nach der anderen in einer vorbestimmten Reihe durch Mittel der Steuereinheit (6), die mit dem Steuermodul (5) verbunden ist, auswählbar sind;
- das Steuermodul (5) in einer Weise arbeitet, dass in Reaktion auf Steuersignale (10), die von der benutzerbedienbaren Steuereinheit (6) ausgegeben werden, der Videostromprozessor (2) ein Ausgangsvideosignal generiert, das Hinweise über die Konfiguration der hierarchischen Ebene der Beförderungskonfiguration umfasst, die zurzeit von einem Benutzer ausgewählt ist;
- der mindestens eine Teil der einen oder mehreren Bilder oder Videodaten, der im Ausgangsvideosignal, das durch den Videoprozessor (2) erzeugt wird, umfasst ist, unter Berücksichtigung der vorherigen Auswahlen der tieferen Hierarchieebene der Beförderungskonfiguration sowie der Auswahl der Hierarchieebene, die zurzeit ausgewählt ist, angezeigt wird.

13. Verfahren nach einem der vorhergehenden Ansprüche, wobei für zumindest eine Option, die von einem Benutzer in einer bestimmten Hierarchieebene auswählbar ist, alle Optionen für die auswählbaren nächsten Hierarchieebenen vordefiniert sind, sodass eine Standardkonfiguration gebildet wird, sodass im Falle, dass mindestens eine Konfiguration durch einen Benutzer ausgewählt wird, das Steuermodul (5) in einer Weise betrieben wird, sodass der Videostromprozessor (2) den dreidimensionalen Anzeigeerzeugungsvorgang für die Standardkonfiguration aktiviert.

14. Verfahren nach einem oder mehreren der vorhergehenden Ansprüche, wobei zumindest ein Teil der einen oder mehreren Bilder oder Videodaten halbtransparent auf der dreidimensionalen Anzeige überlagert wird.

15. Verfahren nach einem oder mehreren der vorhergehenden Ansprüche, wobei zumindest ein Teil der einen oder mehreren Bilder oder Videodaten undurchsichtig auf dem dreidimensionalen Display überlagert wird.

16. Verfahren nach einem oder mehreren der vorhergehenden Ansprüche, wobei die Programmierung des Videostromprozessors (2) durch einen ferngesteuerten oder lokalen Aktualisierungsprozess aktualisiert und/oder durch einen Benutzer bestimmt oder wiederbestimmt werden kann.

17. Verfahren nach einem oder mehreren der vorhergehenden Ansprüche, wobei der Videostromprozessor (2) ferner eingerichtet ist, ein zweidimensionales Videosignal zu erzeugen.

18. Videoerzeugungsvorrichtung zum Erzeugen eines dreidimensionalen Videoinhalts, um einem Benutzer zu erlauben, eine geeignete Beförderungskonfiguration des Inhalts selbst auszuwählen, um durch einen Videostromprozessor (2) erzeugt zu werden, sodass ein dreidimensionaler Effekt auf einem Bildschirm einer verbundenen Visualisierungsvorrichtung (4) erzeugt wird, wobei die Videoerzeugungsvorrichtung den Videostromprozessor (2) umfasst, dem ein Eingangsvideostrom (Fi) eingegeben wird, der eine Reihe von einzelnen Videoframes umfasst, die jeweils ein oder mehrere Bilder oder Videodaten gemäß einer spezifischen dreidimensionalen Videobeförderungskonfiguration beinhalten, wobei der Videostromprozessor (2) Verarbeitungsmittel zum Bereitstellen eines ersten Operationsmodus umfasst, bei dem der Videostromprozessor (2) eine Umwandlung und Anpassung des Eingangsvideostroms (Fi) ausführt, um ihn für eine Wiedergabe auf der verbundenen Visualisierungsvorrichtung (4), die einen dreidimensionalen Effekt erzeugt, anzupassen, und ferner zum Bereitstellen eines zweiten Operationsmodus umfasst, bei dem der Videostrom (7) verarbeitet wird, um ein Ausgangssignal (9) zu erhalten, wobei zumindest ein Teil der einen oder mehreren Bilder oder Videodaten, die in einem einzelnen Videoframe des Videostroms (7) enthalten sind, der zurzeit zur Anzeige ausgewählt ist, in einem Bereich eines solchen Bildschirms dargestellt wird, wobei Anordnung und Inhalt, die die einen oder mehreren Bilder oder Videodaten in einem einzelnen Frame haben, beibehalten werden, wobei die Anordnung und der Inhalt dem Benutzer einen visuellen Hinweis der Beförderungskonfiguration des Eingangsvideostroms geben und einem Benutzer helfen, die spezifische Beförderungskonfiguration auszuwählen.

19. Vorrichtung nach Anspruch 18, umfassend einen Projektor für einen Bildschirm zum Erzeugen eines Ausgangsvideosignals (9, 13), das vom Videostromprozessor (2) erzeugt wird.

20. Vorrichtung nach Anspruch 18 oder 19, wobei die Visualisierungsvorrichtung (4) in die Videoverarbeitungsvorrichtung integriert ist.

21. Vorrichtung nach einem der Ansprüche 18 bis 20, wobei die Visualisierungsvorrichtung (4) mit dem Videostromprozessor (2) durch eine drahtgebundene oder eine drahtlose Schnittstelle verbunden ist.

## Revendications

1. Procédé permettant de traiter un contenu vidéo tridimensionnel afin de permettre à un utilisateur de sélectionner une configuration de transfert correcte du contenu qui doit lui-même être traité par un processeur de flux vidéo (2) de façon à produire un effet tridimensionnel sur un écran d'un appareil de visualisation associé (4), dans lequel le processeur de flux vidéo (2) reçoit en entrée un flux vidéo d'entrée (Fi) comportant une série de trames vidéo uniques contenant, chacune, une ou plusieurs image(s) ou des données vidéo selon une configuration de transfert vidéo tridimensionnelle spécifique, dans lequel ledit processeur de flux vidéo (2) peut passer d'un premier mode de fonctionnement, dans lequel ledit processeur de flux vidéo (2) exécute une conversion et une adaptation dudit flux vidéo d'entrée (Fi) afin de le rendre approprié pour être reproduit sur ledit appareil de visualisation associé (4) produisant ledit effet tridimensionnel, à un second mode de fonctionnement, dans lequel ledit processeur vidéo traite ledit flux vidéo (7) pour obtenir un signal de sortie (9) dans lequel au moins une partie de ladite ou desdites image(s) ou données vidéo contenue(s) dans une trame vidéo unique dudit flux vidéo (7), en cours de sélection en vue d'un affichage, sont affichées dans une partie de cet écran en maintenant un agencement et un contenu tels que ceux que cette image ou ces images ou données vidéo présente(nt) dans ladite trame unique, ledit agencement et ledit contenu de ladite, desdites, une ou plusieurs image(s) ou données vidéo donnant à l'utilisateur une indication visuelle de la configuration de transfert du flux vidéo d'entrée et aidant l'utilisateur à sélectionner ladite configuration de transfert spécifique.

2. Procédé selon la revendication 1, dans lequel ladite au moins une partie de ladite ou desdites image(s) et/ou données vidéo est générée par le processeur de flux vidéo (2) d'une manière telle qu'elle apparaît se positionner dans le plan visuel correspondant au plan apparent de l'écran (30) dudit appareil de visualisation (4).

3. Procédé selon l'une ou plusieurs des revendications précédentes, dans lequel ladite au moins une partie de ladite ou desdites image(s) et/ou données vidéo générée par le processeur de flux vidéo (2) peut être agrandie et réduite et/ou reproportionnée et/ou déplacée par l'utilisateur.

4. Procédé selon une ou plusieurs des revendications précédentes, dans lequel ledit processeur de flux vidéo (2) passe dudit premier mode de fonctionnement au dit second mode de fonctionnement en réponse à un signal de commande (8) généré par une unité de commande (6) associée à un module de commande (5), ladite unité de commande (6) pouvant être activée par un utilisateur.

5. Procédé selon la revendication 4, dans lequel il existe des moyens permettant de reconnaître la configuration de transfert du flux vidéo d'entrée (Fi) et dans lequel ledit signal de commande (8) est généré dans le cas où ladite configuration de transfert spécifique ne serait pas reconnue par lesdits moyens de reconnaissance.

6. Procédé selon la revendication 5, dans lequel ledit affichage tridimensionnel peut être obtenu en activant une procédure correspondante produisant ledit affichage tridimensionnel.

7. Procédé selon la revendication 6, dans lequel au moins ladite partie de ladite ou desdites image(s) ou données vidéo (43, 45) est reproduite correctement sur l'appareil de visualisation associé (4), sauvegarde en vue d'un quelconque redimensionnement unidirectionnel, selon ladite procédure produisant ledit affichage tridimensionnel.

8. Procédé selon la revendication 6, dans lequel ledit signal vidéo de sortie (9, 13) comprend, de plus, une indication de la configuration de transfert, ou une configuration active, utilisée couramment dans ladite procédure produisant ledit affichage tridimensionnel.

9. Procédé selon la revendication 6, dans lequel ledit signal vidéo de sortie (9, 13) affiche une liste d'une pluralité de configurations de transfert du flux d'entrée (Fi) pour lequel le processeur vidéo (2) peut activer ladite procédure produisant ledit affichage tridimensionnel.

10. Procédé selon la revendication 8 ou 9, dans lequel, lorsque ladite configuration active est soulignée, les configurations de transfert de ladite liste peuvent être sélectionnées par un utilisateur par l'intermédiaire d'une unité de commande (6), et, lorsqu'une configuration est sélectionnée à partir de ladite liste, le module de commande (5) associé à ladite unité de commande opère d'une manière telle que le processeur de flux vidéo (2) active la procédure de production d'affichage tridimensionnel correspondant à la configuration de transfert sélectionnée par l'utilisateur.

11. Procédé selon les revendications 8 et 9, dans lequel ladite liste comprend également des configurations non programmées, et dans lequel, si l'une desdites configurations non programmées est sélectionnée, le module de commande (6) opère d'une manière telle que le signal vidéo de sortie généré par le processeur vidéo (2) comporte une indication indiquant que la configuration de transfert sélectionnée n'est pas supportée.

12. Procédé selon la revendication 10 ou 11, dans lequel :
- une pluralité de configurations de transfert est stockée sous la forme d'ensembles d'options présentant des niveaux hiérarchiques différents, pouvant être sélectionnées successivement par l'utilisateur l'une après l'autre dans une séquence prédéterminée au moyen de ladite unité de commande (6) associée au dit module de commande (5) ;
- ledit module de commande (5) opère d'une manière telle que, en réponse à des signaux de commande (10) délivrés par l'unité de commande exploitable par l'utilisateur (6), le processeur de flux vidéo (2) génère un signal vidéo de sortie comportant des indications au sujet de la configuration du niveau hiérarchique de la configuration de transfert en cours qui a été sélectionnée par l'utilisateur ;
- la, au moins une, partie de ladite ou desdites image(s) ou données vidéo comprise(s) dans le signal vidéo de sortie produit par le processeur vidéo (2) est affichée en prenant en compte les sélections précédentes de niveaux hiérarchiques inférieurs de la configuration de transfert, de même que la sélection du niveau hiérarchique en cours qui est sélectionné.

13. Procédé selon la revendication précédente, dans lequel, pour au moins une option qui peut être sélectionnée par l'utilisateur à un certain niveau hiérarchique de configuration de transfert, toutes les options qui peuvent être sélectionnées pour les niveaux hiérarchiques suivants sont prédéfinies, formant ainsi une configuration par défaut, de sorte que, lorsque une telle, au moins une, configuration est sélectionnée par l'utilisateur, le module de commande (5) opère d'une manière telle que le processeur de flux vidéo (2) active la procédure de production d'affichage tridimensionnel programmée pour ladite configuration par défaut.

14. Procédé selon une ou plusieurs des revendications précédentes, dans lequel ladite, au moins une, partie de ladite ou desdites, au moins une ou plusieurs image(s) ou données vidéo, est superposée en semi-transparence sur ledit affichage tridimensionnel.

15. Procédé selon une ou plusieurs des revendications précédentes, dans lequel ladite, au moins une, partie de ladite ou desdites au moins une, ou plusieurs image(s) ou données vidéo, est superposée en opacité sur ledit affichage tridimensionnel.

16. Procédé selon une ou plusieurs des revendications précédentes, dans lequel la programmation dudit processeur de flux vidéo (2) peut être actualisée par un processus d'actualisation, local ou à distance, et/ou peut être déterminée ou déterminée à nouveau par l'utilisateur.

17. Procédé selon l'une quelconque des revendications précédentes, dans lequel ledit processeur de flux vidéo (2) est, en outre, conçu pour générer un signal vidéo bidimensionnel.

18. Appareil de traitement vidéo permettant de traiter un contenu vidéo tridimensionnel dans le but de permettre à un utilisateur de sélectionner une configuration de transfert correcte du contenu, qui doit lui-même être traité par un processeur de flux vidéo (2) de façon à produire un effet tridimensionnel, sur un écran d'un appareil de visualisation associé (4), ledit appareil de traitement vidéo comportant ledit processeur de flux vidéo (2), lequel reçoit en entrée un flux vidéo d'entrée (Fi) comprenant une série de trames vidéo uniques contenant, chacune, une ou plusieurs image(s) ou données vidéo selon une configuration de transfert vidéo tridimensionnelle spécifique, dans lequel ledit processeur de flux vidéo (2) comporte des moyens de traitement fournissant un premier mode de fonctionnement dans lequel ledit processeur de flux vidéo (2) exécute une conversion et une adaptation dudit flux vidéo d'entrée (Fi) afin de le rendre approprié pour être reproduit sur ledit appareil de visualisation associé (4) produisant ledit effet tridimensionnel et fournissant, en outre, un second mode de fonctionnement, dans lequel ledit flux vidéo (7) est traité afin d'obtenir un signal de sortie (9) dans lequel une partie, au moins, de ladite ou desdites image(s) ou données vidéo contenue (s) dans une trame vidéo unique dudit flux vidéo (7), en cours de sélection en vue d'un affichage, est affichée dans une partie de cet écran, en maintenant un agencement et un contenu tels que ceux que cette image ou ces images ou données vidéo présente(nt) dans ladite trame unique, ledit agencement et contenu fournissant à l'utilisateur une indication visuelle de la configuration de transfert du flux vidéo d'entrée et aidant l'utilisateur à sélectionner ladite configuration de transfert spécifique.

19. Appareil selon la revendication 18, comprenant un projecteur destiné à un écran pour reproduire le signal vidéo de sortie (9, 13) généré par ledit processeur de flux vidéo (2).

20. Appareil selon la revendication 18 ou 19, dans lequel ledit appareil de visualisation (4) est intégré dans ledit appareil de traitement vidéo.

21. Appareil selon l'une des revendications 18 à 20, dans lequel ledit appareil de visualisation (4) est associé au dit processeur de flux vidéo (2) par l'intermédiaire d'une interface de connexion câblée ou sans fil.
